# EUROPEAN PATENT SPECIFICATION

(11) **EP 4 054 129 B1**
(45) Date of publication and mention of the grant of the patent: **08.01.2025**
(21) Application number: 20892879.6
(22) Date of filing: 27.11.2020
(51) Int. Cl.: H04L 12/437

(54) **DATA TRANSMISSION OVER AN ETHERNET RING**
DATENÜBERTRAGUNG ÜBER EINEN ETHERNETRING
TRANSMISSION DE DONNÉES VIA UN ANNEAU ETHERNET

(30) Priority: 29.11.2019 CN 201911207356
(43) Date of publication of application: 07.09.2022
(73) Proprietor: Huawei Technologies Co., Ltd., Shenzhen, Guangdong 518129 (CN)
(72) Inventor: HE, Dongdong, Shenzhen, Guangdong 518129 (CN); ZHA, Min, Shenzhen, Guangdong 518129 (CN); CHEN, Qichang, Shenzhen, Guangdong 518129 (CN); YANG, Xiong, Shenzhen, Guangdong 518129 (CN)
(74) Representative: Isarpatent
(86) International application number: PCT/CN2020/132433
(87) International publication number: WO 2021/104491

(56) References cited:
- CN-A- 101 453 666
- CN-A- 101 895 455
- CN-A- 102 106 121
- US-A1- 2002 144 190
- US-A1- 2009 274 044
- US-A1- 2011 194 404
- US-A1- 2012 250 695

## Description

### TECHNICAL FIELD

This application relates to the field of communications technologies, and in particular, to a data transmission method, and a communications apparatus.

### BACKGROUND

An in-vehicle network (In-vehicle Network) is a network that carries data transmission of various devices such as sensors, controllers, and actuators inside a vehicle, providing features such as high reliability, low latency, and fast startup in a short time for data transmission. With development of electric and intelligent automobiles, a conventional control area network (control area network, CAN) can no longer meet requirements of devices such as vehicle-mounted sensors for large bandwidths and the like. Therefore, the Ethernet with a large bandwidth and a huge industrial ecosystem is used as a next-generation in-vehicle network. This has become a mainstream consensus in the industry.

In addition, a ring network topology has advantages of a simplified backbone redundancy topology, various usable failure recovery technologies, and a simplified control protocol, and is a widely used network topology with reliability. In this way, an in-vehicle network may be designed to have a ring Ethernet topology. To be specific, an Ethernet ring network is used as an in-vehicle network, and a dual-fed and selective receiving mechanism or a wrapping mechanism is used in the Ethernet ring network, to meet a requirement for transmission reliability.

However, if both the dual-fed and selective receiving mechanism and the wrapping mechanism are used in the Ethernet ring network, a source node sends two identical redundant packets in two transmission directions, clockwise and counterclockwise, of the ring network. In a case of a link or node failure, a node with a failure detected on a ring network interface performs wrapping so that a dual-fed packet is wrapped. In this case, two identical redundant packets are successively transmitted in a failure-free transmission direction of the ring network. Consequently, a destination node performs unnecessary selective reception, and a bandwidth is wasted in the failure-free transmission direction of the ring network. In view of this, it is proposed in the conventional technology that a flow-based access control list (access control list, ACL) be manually configured on each node in an Ethernet ring network serving as an in-vehicle network, to prohibit, based on the ACL, forwarding of a wrapped dual-fed redundant packet.

However, for large amounts of service traffic in the in-vehicle network, manual configuration is rather complex and occupies a large number of ACL entries. In addition, ACL entries of all nodes may be updated due to changes of various sensors connected to the nodes or changes of nodes in the ring network, featuring poor scalability. Therefore, when the Ethernet ring network uses both the dual-fed and selective receiving mechanism and the wrapping mechanism, how to conveniently and efficiently avoid transmitting two redundant packets in one transmission direction of the ring network is a problem to be urgently resolved.

US 2011/0194404 A1 discloses a system and a method for fast protection of dual homed Virtual Private LAN Service (VPLS) spokes.

### SUMMARY

This application provides a data transmission method, and a communications apparatus, as defined in the appended set of claims, so as to conveniently and efficiently avoid that a plurality of redundant packets are transmitted in one transmission direction of a ring network due to wrapping.

According to the solution in this application, when detecting a failure on the first Ethernet interface, the first communications device identifies a multi-fed packet based on first indication information and drops the multi-fed packet, thereby avoiding wrapping the multi-fed packet in a wrapping process. In this way, there is no wrapped multi-fed packet in a data transmission system, and transmission of a plurality of redundant packets in one transmission path due to wrapping can be conveniently and efficiently avoided. When a plurality of transmission paths for transmitting multi-fed packets include transmission paths in two transmission directions, clockwise and counterclockwise, of one Ethernet ring network, this can avoid transmitting at least two identical redundant packets in one ring network direction of the Ethernet ring network due to wrapping.

In a possible design, that the first Ethernet interface of the first communications device receives a first packet includes that the first Ethernet interface of the first communications device receives the first packet looped back by the first Ethernet interface. According to this solution, the first communications device can identify and drop a multi-fed packet that is looped back, thereby avoiding wrapping the multi-fed packet and further avoiding transmitting a plurality of redundant packets in one transmission path of the Ethernet ring network.

In a possible design, that the first Ethernet interface of the first communications device receives a first packet includes that the first Ethernet interface of the first communications device receives the first packet from a second Ethernet interface of the first communications device. According to this solution, before performing port-level loopback on the first Ethernet interface, the first communications device can identify and drop a multi-fed packet, thereby avoiding looping back the multi-fed packet, and further avoiding wrapping the multi-fed packet in a subsequent wrapping process.

In a possible design, that the first Ethernet interface of the first communications device receives a first packet includes that the first Ethernet interface of the first communications device receives the first packet from a first service interface of the first communications device, where the first service interface is an interface used by the first communications device for connecting to a first service device.

In a possible design, the data transmission method further includes: The first service interface of the first communications device receives the first packet from the first service device, where first indication information in the first packet indicates that the first packet is a multi-fed packet, and the first service interface of the first communications device forwards the first packet to the first Ethernet interface of the first communications device. According to this solution, the first communications device can identify a multi-fed packet from a service device based on first indication information, and drop the multi-fed packet before performing port-level loopback after detecting a failure, thereby avoiding looping back the multi-fed packet and further avoiding wrapping the multi-fed packet in a subsequent wrapping process.

In a possible design, the data transmission method further includes: The first service interface of the first communications device receives a second packet from the first service device, and further re-encapsulates the second packet into the first packet, and the first service interface of the first communications device forwards the first packet to the first Ethernet interface of the first communications device, where when a reliability mechanism corresponding to the second packet is a multi-fed and selective receiving mechanism, the first indication information indicates that the first packet is a multi-fed packet, and when the reliability mechanism corresponding to the second packet is a wrapping mechanism, the first indication information indicates that the first packet is not a multi-fed packet.

According to this solution, the first communications device can encapsulate packets sent by a service device into a first packet with different first indication information based on a reliability mechanism corresponding to that packet, so that when a failure is detected on the first Ethernet interface later, the first packet protected by the multi-fed and selective receiving mechanism is dropped to avoid looping back the multi-fed packet, and further avoid wrapping the multi-fed packet in a subsequent wrapping process.

In a possible design, the data transmission method further includes: The first service interface of the first communications device forwards the first packet to the second Ethernet interface of the first communications device.

In a possible design, the data transmission method further includes: When the first indication information indicates that the first packet is not a multi-fed packet, and a value of a first field in the first packet is a first numerical value, the first communications device sets the value of the first field to a second numerical value, where the first numerical value is used to indicate that a transmission direction of the first packet in the Ethernet ring network has not changed, and the second numerical value is used to indicate that the transmission direction of the first packet in the Ethernet ring network has changed. According to this solution, in a wrapping process, the first communications device wraps only packets that are not multi-fed, thereby reducing waste of bandwidth and avoiding unnecessary selective reception by a receive node.

In a possible design, the multi-fed and selective receiving mechanism means that a source device sends at least M identical packets to a destination device through M different transmission paths, and the destination device receives one of the at least M identical packets and drops the other redundant packets in the at least M packets, where M is a positive integer greater than or equal to 2.

In a possible design, the multi-fed packet in the embodiments of this application is any one of the at least M identical packets transmitted on the M different transmission paths between the source device and the destination device. It may be understood that, in the embodiments of this application, at least one of the at least M identical packets is transmitted on any one of the M different transmission paths.

In a possible design, communications devices in any one of the M different transmission paths are all communications devices in one Ethernet ring network. Any two of the M different transmission paths do not overlap in parts belonging to the Ethernet ring network.

In a possible design, when M is equal to 2, the multi-fed and selective receiving mechanism is a dual-fed and selective receiving mechanism. When the dual-fed and selective receiving mechanism is applied to one Ethernet ring network, the dual-fed and selective receiving mechanism may mean that a source device sends at least two identical packets to a destination device in a clockwise transmission direction and a counterclockwise transmission direction of the Ethernet ring network, and the destination device receives one of the at least two identical packets and drops the other redundant packets in the at least two identical packets.

In a possible design, when M is equal to 2, and the dual-fed and selective receiving mechanism is applied to one Ethernet ring network, the a dual-fed packet may be any one of at least two identical packets transmitted in clockwise and counterclockwise transmission directions of the Ethernet ring network. It may be understood that, in the embodiments of this application, at least one of the at least two identical packets is transmitted in any one of clockwise and counterclockwise transmission directions of the Ethernet ring network.

This application is more concise and easier to understand in the following description of embodiments.

### BRIEF DESCRIPTION OF DRAWINGS

FIG. 1a is a schematic structural diagram of a data transmission system according to an embodiment of this application;
FIG. 1b is a schematic structural diagram of another data transmission system according to an embodiment of this application;
FIG. 1c is a schematic structural diagram of still another data transmission system according to an embodiment of this application;
FIG. 1d is a schematic diagram 1 of dual feeds and selective reception according to an embodiment of this application;
FIG. 1e is a schematic diagram of triple feeds and selective receiving according to an embodiment of this application;
FIG. 2a is a schematic diagram 2 of dual feeds and selective reception according to an embodiment of this application;
FIG. 2b is a schematic diagram 3 of dual feeds and selective reception according to an embodiment of this application;
FIG. 2c is a schematic diagram 4 of dual feeds and selective reception according to an embodiment of this application;
FIG. 2d is a schematic diagram 5 of dual feeds and selective reception according to an embodiment of this application;
FIG. 3a is a schematic diagram of a packet transmission path in a normal case according to an embodiment of this application;
FIG. 3b is a schematic diagram of wrapping in an abnormal case according to an embodiment of this application;
FIG. 4 is a schematic structural diagram of a communications device according to an embodiment of this application;
FIG. 5 is a schematic diagram of a packet transmission path in an abnormal case when both a dual-fed and selective receiving mechanism and a wrapping mechanism are used;
FIG. 6a is a frame format 1 of a multi-fed packet according to an embodiment of this application;
FIG. 6b is a frame format 2 of a multi-fed packet according to an embodiment of this application;
FIG. 6c is a frame format 3 of a multi-fed packet according to an embodiment of this application;
FIG. 6d is a frame format 4 of a multi-fed packet according to an embodiment of this application;
FIG. 7a is a frame format 1 of a non-multi-fed packet according to an embodiment of this application;
FIG. 7b is a frame format 2 of a non-multi-fed packet according to an embodiment of this application;
FIG. 8 is a schematic flowchart 1 of a data transmission method according to an embodiment of this application;
FIG. 9a is a schematic flowchart 2 of a data transmission method according to an embodiment of this application;
FIG. 9b is a schematic diagram of a transmission path of a first packet in a first communications device in a normal case according to an embodiment of this application;
FIG. 9c is a schematic diagram of port-level loopback according to an embodiment of this application;
FIG. 10 is a schematic diagram of a packet receiving procedure according to an embodiment of this application;
FIG. 11a is a schematic diagram of a packet transmission path in a normal case in a data transmission method according to an embodiment of this application;
FIG. 11b is a schematic diagram 1 of a packet transmission path in an abnormal case of a data transmission method according to an embodiment of this application;
FIG. 12a is a schematic flowchart 3 of a data transmission method according to an embodiment of this application;
FIG. 12b is a schematic diagram 2 of a packet transmission path in an abnormal case of a data transmission method according to an embodiment of this application; and
FIG. 13 is a schematic structural diagram of a first communications device according to an embodiment of this application.

### DESCRIPTION OF EMBODIMENTS

For ease of understanding the technical solutions in the embodiments of this application, the following first briefly describes technologies or terms related to this application.

### 1. In-vehicle network

An in-vehicle network (In-vehicle Network) is a network that carries data transmission of various devices such as sensors, controllers, and actuators inside a vehicle. Due to the special application scenario of an in-vehicle network, many special requirements are imposed on design of in-vehicle networks. For example, a short cable distance is required, with a length of a single cable typically not exceeding 15 meters; or greater tolerance to temperature and resistance to electromagnetic interference in a surrounding environment are required; or higher reliability is required, that is, a shorter failure recovery time is required; or an extremely short network startup time is required, for example, the startup time is required to be less than 100 milliseconds; or a shorter end-to-end communication delay is required; or service traffic transmission behavior is required to be reproducible or predictable.

With development of electric and intelligent automobiles, advanced driver assistance systems (advanced driver assistance system, ADAS) are widely deployed in automobiles. An ADAS is an intelligent system used to assist and guide a driver during driving. In this scenario, conventional low-rate in-vehicle networks such as a CAN are unable to support higher transmission bandwidth required by sensors in the ADAS. Therefore, using an Ethernet that has a large bandwidth and a huge industrial ecosystem as a next-generation in-vehicle network has become a mainstream consensus in the industry.

In addition, because two redundant transmission paths between a source node and a destination node can be planned and configured in a ring network topology of an Ethernet (that is, an Ethernet ring network), presence of at least two separate transmission paths as required by a multi-fed and selective receiving solution proposed in the Institute of Electrical and Electronics Engineers (institute of electrical and electronics engineers, IEEE) 802.1CB protocol can be satisfied. In addition, wrapping is a networking advantage of the ring network topology such that a path to the destination node can be found in an opposite direction after a failure occurs. Therefore, the in-vehicle network may be designed as a ring Ethernet, or Ethernet ring network, which may be referred to as an in-vehicle ring network or a ring network for short. In addition, a multi-fed and selective receiving mechanism and/or a wrapping mechanism is used to satisfy a requirement for transmission reliability.

### 2. Multi-fed and selective receiving

In the embodiments of this application, a multi-fed and selective receiving mechanism means that a source device sends at least M identical packets to a destination device through M different transmission paths, and the destination device receives one of the at least M identical packets and drops the other redundant packets in the at least M packets, where M is a positive integer greater than or equal to 2.

Correspondingly, in the embodiments of this application, a multi-fed packet means any one of the at least M identical packets transmitted on the M different transmission paths between the source device and the destination device.

It should be noted that, in the embodiments of this application, at least one of the at least M identical packets is transmitted on any one of the M different transmission paths.

It should be noted that, in the embodiments of this application, "packet" means an information carrier unit in an Ethernet, which may also be understood as "data frame", "frame", "traffic", or "data flow". These terms are interchangeable and are not specifically limited in the embodiments of this application.

It should be noted that, in the embodiments of this application, communications devices in any one of the M different transmission paths are all communications devices in one Ethernet ring network. All "communications devices" are communications devices that form the Ethernet ring network. Any two of the M different transmission paths do not overlap in parts belonging to the Ethernet ring network. The "M different transmission paths" may also be understood as "M separate transmission paths". The terms "M different transmission paths" and "M separate transmission paths" are interchangeable and are not specifically limited in the embodiments of this application.

Optionally, the multi-fed and selective receiving mechanism in the embodiments of this application may be implemented by using a frame replication and elimination for reliability (frame replication and elimination for reliability, FRER) solution provided by the IEEE 802.1CB protocol. Alternatively, in other word, the multi-fed and selective receiving mechanism in the embodiments of this application includes a frame replication and elimination for reliability solution of the IEEE 802.1CB. Correspondingly, in this case, the multi-fed packet may alternatively mean a packet whose frame format is the same as that defined in the IEEE 802.1CB protocol.

Optionally, the source device may obtain at least M identical packets by means of packet replication. The destination device may receive a packet that earliest arrives in the at least M identical packets, and drop other redundant packets that arrive later in the at least M packets.

Due to the multi-fed and selective receiving mechanism, in a normal case, the destination device selectively receives one packet of at least M identical packets, and eliminates other redundant packets of the at least M identical packets. In an abnormal case, for example, when a link failure occurs on some of the M different transmission paths or a failure occurs in a communications device on the path, the identical packet may be transmitted to the destination device through a failure-free transmission path, so as to ensure transmission reliability.

It may be understood that when M is equal to 2, the multi-fed and selective receiving mechanism is a dual-fed and selective receiving mechanism. In the embodiments of this application, the dual-fed and selective receiving mechanism may be applied to one Ethernet ring network, or may be applied to a plurality of Ethernet ring networks. This is not specifically limited in the embodiments of this application.

In the embodiments of this application, when the dual-fed and selective receiving mechanism is applied to one Ethernet ring network, the dual-fed and selective receiving mechanism may mean that a source device sends at least two identical packets to a destination device in a clockwise transmission direction and a counterclockwise transmission direction of the Ethernet ring network, and the destination device receives one of the at least two identical packets and drops the other redundant packets in the at least two identical packets.

Correspondingly, in this scenario, a dual-fed packet may be any one of at least two identical packets transmitted in clockwise and counterclockwise transmission directions of the Ethernet ring network.

It should be noted that, in the embodiments of this application, at least one of the at least two identical packets is transmitted in any one of clockwise and counterclockwise transmission directions of the Ethernet ring network.

It should be noted that sending at least two identical packets to the destination device in the clockwise transmission direction and the counterclockwise transmission direction in the Ethernet ring network may be understood as that the source device sends at least two identical packets to the destination device through a transmission path in the clockwise transmission direction and a transmission path in the counterclockwise transmission direction in the Ethernet ring network.

Optionally, when the Ethernet ring network is used as an in-vehicle network, the multi-fed and selective receiving mechanism may be used as a protection mechanism for key control services in the in-vehicle network. Traffic (or data) of such services has extremely high requirements on real-time performance and reliability, with no service interruption allowed. Otherwise, driving safety may be affected.

### 3. Wrapping

In the embodiments of this application, a wrapping (wrapping) mechanism means that in an Ethernet ring network, a communications device that detects a failure on a ring network interface loops back, on the ring network interface, all packets that arrive at the ring network interface, to forward the packets that arrive at the ring network interface to another ring network interface of the communications device, so that the another ring network interface sends the packets in a transmission direction different from an initial transmission direction, and a transmission direction of the packets in the Ethernet ring network is changed relative to the initial transmission direction. The initial transmission direction is a transmission direction in the Ethernet ring network of a packet that arrives at the ring network interface before the communications device detects the failure on the ring network interface.

To be specific, the wrapping mechanism may be understood as that a communications device that detects a failure on a ring network interface changes a transmission direction in the Ethernet ring network of a packet transmitted to the ring network interface, so that the packet transmitted to the ring network interface is transmitted in the Ethernet ring network in a transmission direction different from an initial transmission direction.

In a normal case without any failure in the Ethernet ring network, packets generated by a communications device in the Ethernet ring network, or packets that are transmitted to a communications device in the Ethernet ring network for the first time and that need to be transmitted in the Ethernet ring network are transmitted in a default transmission direction (for example, clockwise direction, or clockwise direction) of the ring network. After a link or a communications device fails in the Ethernet ring network, due to wrapping mechanism, packets are transmitted in the Ethernet ring network in a transmission direction different from the default transmission direction, thereby avoiding the failed link or the failed communications device and ensuring transmission reliability.

Optionally, when the Ethernet ring network is used as an in-vehicle network, the wrapping mechanism may be applied to protect services such as ADAS services in the in-vehicle network that occupy a relatively large bandwidth, that are time critical, and that can tolerate a small amount of packet loss occurring in a period from start of interruption of service transmission to recovery of service transmission.

The following describes technical solutions in the embodiments of this application with reference to the accompanying drawings in the embodiments of this application. In the descriptions of this application, "/" represents an "or" relationship between associated objects unless otherwise specified. For example, A/B may represent A or B. The term "and/or" in this application indicates only an association relationship for describing associated objects and indicates that three relationships may exist. For example, A and/or B may indicate the following three cases: Only A exists, both A and B exist, and only B exists, where A and B may be singular or plural. In addition, in the descriptions of this application, "a plurality of" means two or more than two unless otherwise specified. "At least one of the following items (pieces)" or a similar expression thereof means any combination of these items, including any combination of singular items (pieces) or plural items (pieces). For example, at least one of a, b, or c may indicate: a, b, c, a and b, a and c, b and c, or a, b, and c, where a, b, and c may be singular or plural. In addition, to clearly describe the technical solutions in embodiments of this application, words such as "first" and "second" are used in embodiments of this application to distinguish between same items or similar items that have basically the same functions or purposes. A person skilled in the art may understand that the words such as "first" and "second" do not limit a quantity and an execution sequence, and the words such as "first" and "second" do not indicate a definite difference.

An embodiment of this application provides a data transmission system. The data transmission system includes one or more Ethernet ring networks, and the one or more Ethernet ring networks may be used as an in-vehicle network. In this case, the one or more Ethernet ring networks may be collectively referred to as an in-vehicle ring network. Alternatively, the one or more Ethernet ring networks may be used as a network for another purpose. This is not specifically limited in the embodiments of this application. Each Ethernet ring network in the one or more Ethernet ring networks includes at least three communications devices. Each of the at least three communications devices is connected to two communications devices through Ethernet interfaces. The communications device may also be referred to as a regional communications computing gateway (which may be referred to as a gateway for short), a regional communications computing device, a forwarding device, or a node.

In the Ethernet ring network, Ethernet interfaces that connect two adjacent communications devices have a same rate. Optionally, one Ethernet interface used to connect communications devices in the Ethernet ring network may be a 1000BASE-T1 interface or a 10GBASE-T1 interface that complies with an automotive networking standard.

When the data transmission system includes a plurality of Ethernet ring networks, any two of the plurality of Ethernet ring networks may include a same communications device, or the plurality of Ethernet ring networks may be independent of each other, that is, no two of the Ethernet ring networks include a same communications device. This is not specifically limited in the embodiments of this application.

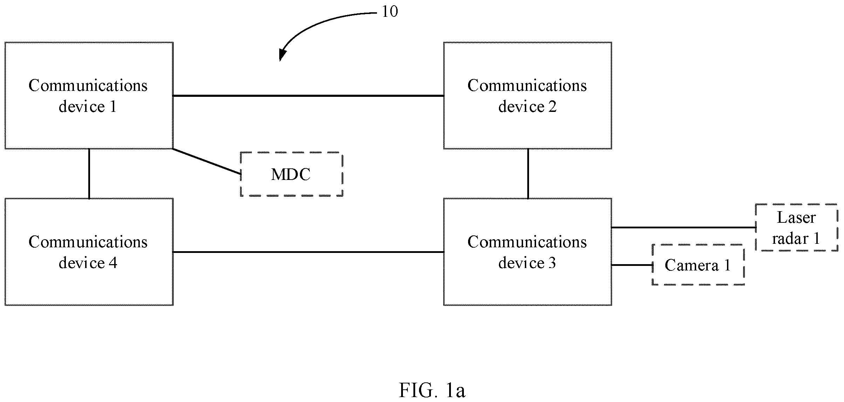

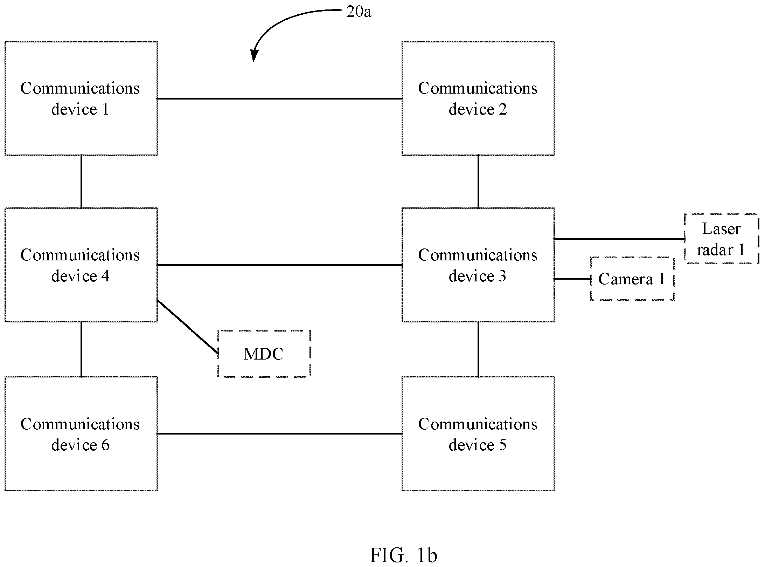

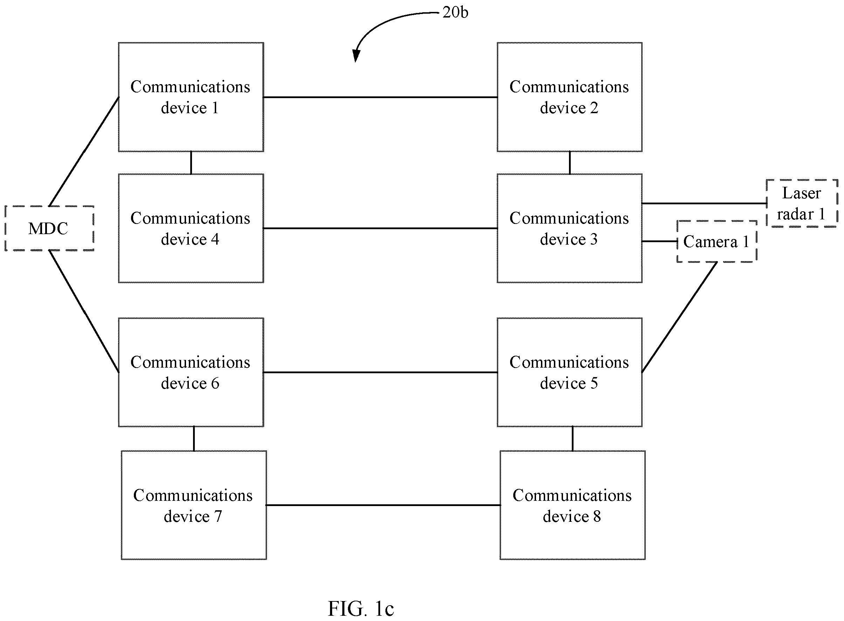

For example, the data transmission system includes one Ethernet ring network, and the Ethernet ring network includes four communications devices, as shown in FIG. 1a which shows a data transmission system 10 provided in an embodiment of this application. Alternatively, for example, the data transmission system includes two Ethernet ring networks, and each Ethernet ring network includes four communications devices, as shown in FIG. 1b which shows another data transmission system 20a provided in an embodiment of this application, where a communications device 1, a communications device 2, a communications device 3, and a communications device 4 form an Ethernet ring network 1, and the communications device 3, the communications device 4, a communications device 5, and a communications device 6 form an Ethernet ring network 2. In this case, the two ring networks both include the communications device 3 and the communications device 4. Alternatively, as shown in FIG. 1c which shows still another data transmission system 20b provided in an embodiment of this application, a communications device 1, a communications device 2, a communications device 3, and a communications device 4 form an Ethernet ring network 1, a communications device 5, a communications device 6, a communications device 7, and a communications device 8 form an Ethernet ring network 2. In this case, the two ring networks do not include a same communications device.

Optionally, the data transmission system may further include various types of service devices. Communications devices in each Ethernet ring network in the data transmission system can all be connected to various types of service devices. Different communications devices may be connected to same or different service devices. This is not specifically limited in the embodiments of this application. When the Ethernet ring network is used as an in-vehicle network, the service devices may be configured to assist vehicle-to-vehicle, vehicle-to-person, vehicle-to-roadside, and vehicle-to-network interconnection and communication. For example, the service devices may be various types of sensors, cameras, laser radars, and the like.

For example, as shown in FIG. 1a, FIG. 1b, or FIG. 1c, the communications device 3 is connected to a laser radar 1 and a camera 1. As shown in FIG. 1c, the camera 1 may also be connected to the communications device 5. It may be understood that the communications device 3 may also be connected to other service devices, and communications devices other than the communications device 3 may also be connected to service devices (not shown in FIG. 1a, FIG. 1b, or FIG. 1c). This is not specifically limited in the embodiments of this application.

Optionally, the data transmission system may further include a processing device. The processing device is connected to at least one communications device in an Ethernet ring network in the data transmission system. The processing device may be configured to control a service device connected to the communications device and perform data processing and the like. The processing device may be, for example, an MDC. It may be understood that the processing device in the embodiments of this application may also be considered as a special service device, and may also be referred to as a service device.

For example, as shown in FIG. 1a, FIG. 1b, or FIG. 1c, the processing device is an MDC. In the data transmission system 10 shown in FIG. 1a, the MDC is connected to the communications device 1 in the Ethernet ring network. In the data transmission system 20a shown in FIG. 1b, the MDC is connected to the communications device 4. In the data transmission system 20b shown in FIG. 1c, the MDC is connected to the communications device 1 in the Ethernet ring network 1 and to the communications device 6 in the Ethernet ring network 2.

It should be noted that, in the embodiments of this application, "ring network interface" means an Ethernet interface used by a communications device for connecting to another communications device. "Service interface" means an Ethernet interface or another type of interface used by a communications device for connecting to a service device (for example, a laser radar) or a processing device. The embodiments of this application do not specifically limit the type of service interface. This applies throughout this application and is not noted again in the following embodiments.

The following describes an application scenario of the above described multi-fed and selective receiving mechanism and wrapping mechanism in the data transmission system provided in this embodiment of this application.

Application scenarios of the multi-fed and selective receiving mechanism in the data transmission system provided in this embodiment of this application are as follows.

It should be noted that when the data transmission system in this embodiment of this application includes one Ethernet ring network, for example, as shown in FIG. 1a, in this embodiment of this application, a source device sends at least two identical packets to a destination device in a clockwise transmission direction and a counterclockwise transmission direction of the Ethernet ring network, which means M is equal to 2. In this case, the multi-fed and selective receiving mechanism may be understood as a dual-fed and selective receiving mechanism. When the data transmission system in this embodiment of this application includes a plurality of Ethernet ring networks, for example, as shown in FIG. 1b, in this embodiment of this application, a source device may send at least M identical packets to a destination device through M different transmission paths.

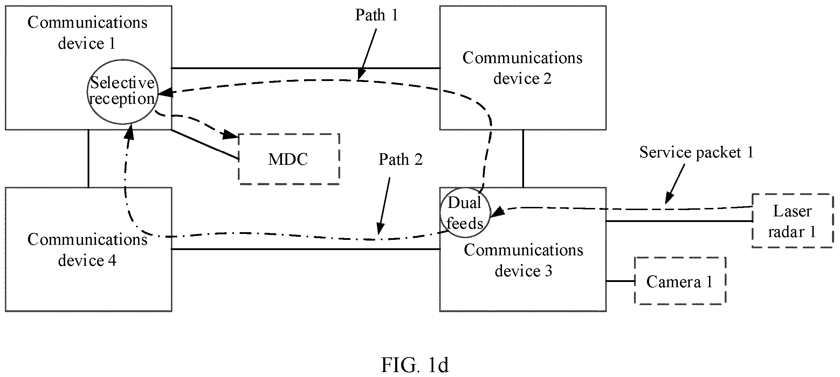

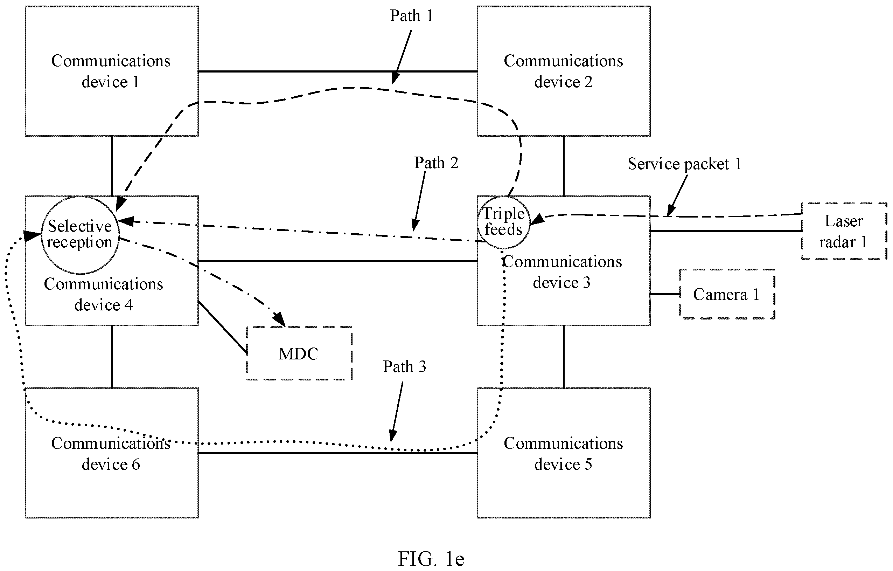

For example, based on the data transmission system shown in FIG. 1a, the source device is the communications device 3, and the destination device is the communications device 1. As shown in FIG. 1d, after encapsulating a service packet 1 from the laser radar 1 into a packet 1, the communications device 3 may send two identical packets 1 to the communications device 1 respectively through a path 1 in the counterclockwise transmission direction and a path 2 in the clockwise transmission direction of the Ethernet ring network. In this case, the communications device 3 provides dual feeds, and the communications device 1 performs selective reception. Alternatively, based on the data transmission system shown in FIG. 1b, for example, the source device is the communications device 3, and the destination device is the communications device 4. As shown in FIG. 1e, the communications device 3 may send three identical packets 1 to the communications device 4 through a path 1, a path 2, and a path 3, respectively. In this case, the communications device 3 provides triple feeds and the communications device 1 performs selective reception.

Optionally, in this embodiment of this application, the source device in the multi-fed and selective receiving mechanism may be referred to as a multi-feed device. The source device may be a communications device, a processing device (such as an MDC), or a service device (such as various types of sensors). The destination device may be referred to as a selective reception device. The destination device may be a communications device, a processing device (such as an MDC), or a service device (such as various types of sensors). This is not specifically limited in this embodiment of this application.

The following uses an example in which the dual-fed and selective receiving mechanism is applied to the data transmission system shown in FIG. 1a to describe the source device and the destination device.

For example, the source device and the destination device may be different communications devices in an Ethernet ring network. As shown in FIG. 1d, the source device may be the communications device 3 in FIG. 1a, and the destination device may be the communications device 1 in FIG. 1a.

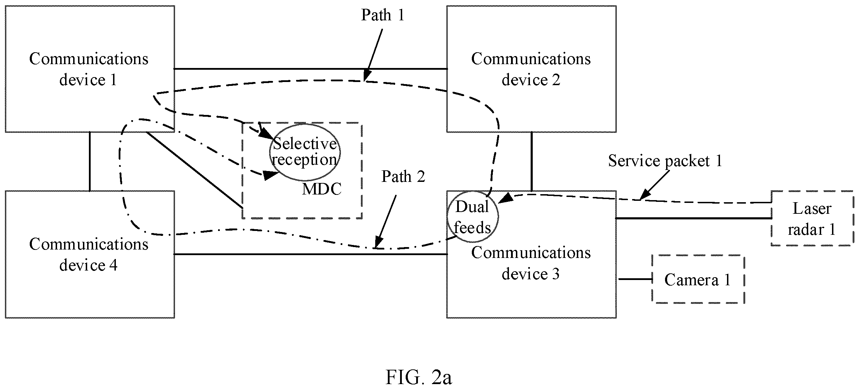

Alternatively, for example, the source device may be a communications device in an Ethernet ring network, and the destination device may be a processing device in a data transmission system. As shown in FIG. 2a, the source device may be the communications device 3 in FIG. 1a, and the destination device may be the MDC in FIG. 1a. In a normal case, the communications device 3 sends the packet 1 obtained by re-encapsulating the service packet 1 to the MDC separately through the path 1 and the path 2, and the MDC selectively receives the packet 1.

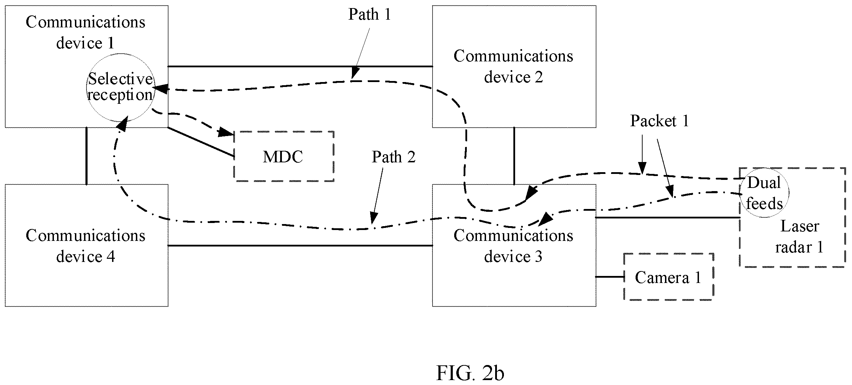

Alternatively, for example, the source device may be a service device in a data transmission system, and the destination device may be a communications device in an Ethernet ring network. As shown in FIG. 2b, the source device may be the laser radar 1 in FIG. 1a, and the destination device may be the communications device 1 in FIG. 1a. In a normal case, the laser radar 1 sends two identical packets 1 to the communications device 3. Then, the packets 1 are sent to the communications device 1 through the path 1 and the path 2 respectively, and the communications device 1 performs selective reception, and forwards the packet 1 to the MDC.

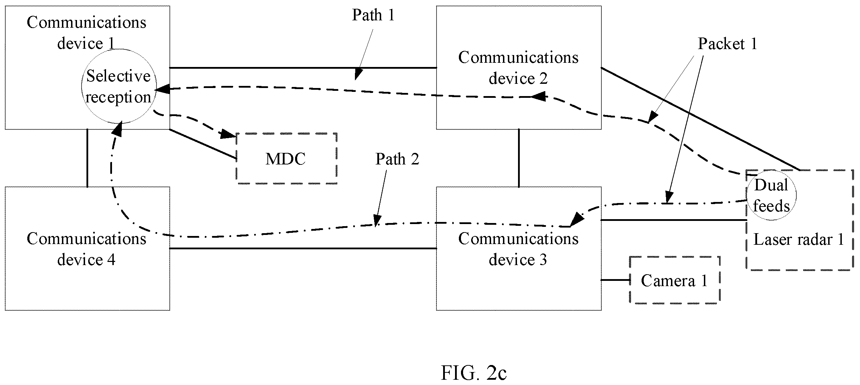

Alternatively, for example, the source device may be a service device in a data transmission system, and the destination device may be a communications device in an Ethernet ring network. In the data transmission system shown in FIG. 1a, for example, the laser radar 1 is also connected to the communications device 2. As shown in FIG. 2c, the source device may be the laser radar 1 in FIG. 1a, and the destination device may be the communications device 1 in FIG. 1a. In a normal case, the laser radar 1 sends a packet 1 to both the communications device 2 and the communications device 3. Then the packets 1 are sent to the communications device 1 through the path 1 and the path 2 respectively, and the communications device 1 performs selective reception, and forwards the packet 1 to the MDC.

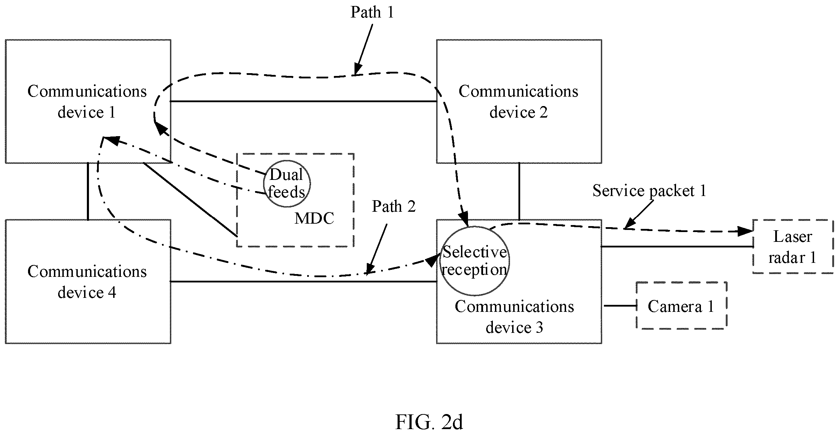

Alternatively, for example, the source device may be a processing device in a data transmission system, and the destination device may be a communications device in an Ethernet ring network. As shown in FIG. 2d, the source device may be the MDC in FIG. 1a, and the destination device may be the communications device 3 in FIG. 1a. In a normal case, the MDC sends two identical packets 1 to the communications device 1. The communications device 1 sends the packets 1 to the communications device 3 through the path 1 and the path 2 respectively. The communications device 3 performs selectively receives the packet, re-encapsulates the packet 1 into a service packet 1, and sends the service packet 1 to the laser radar 1.

It should be noted that, the foregoing is merely illustrative description of some application scenarios of the multi-fed and selective receiving mechanism in the data transmission system provided in this embodiment of this application, and should not impose any limitation on this embodiment of this application. It may be understood that, the data transmission system provided in this embodiment of this application still has other application scenarios for the multi-fed and selective receiving mechanism. This is not specifically limited in this embodiment of this application.

Application scenarios of the wrapping mechanism in the data transmission system provided in this embodiment of this application are as follows.

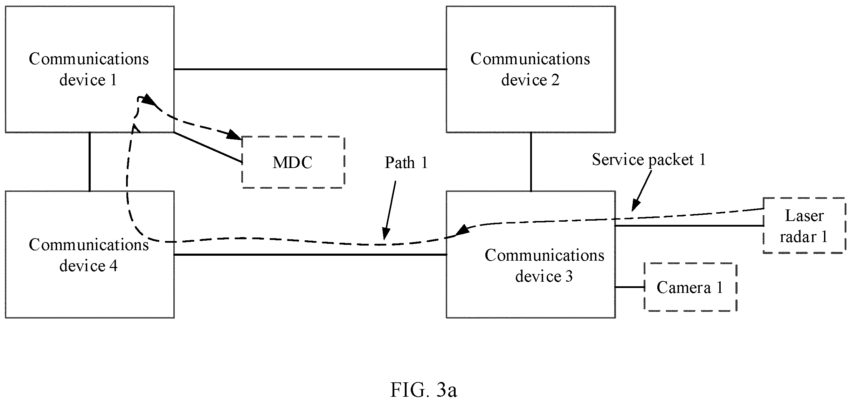

For example, the data transmission system shown in FIG. 1a is used as an example. As shown in FIG. 3a, in a normal case without any failure in the Ethernet ring network, after receiving a service packet 1 from the laser radar connected to the communications device 3, the communications device 3 encapsulates the service packet 1 into a packet 1, and sends the packet 1 through a ring network interface (for example, a ring network interface for connecting to the communications device 4) in a default direction of the ring network (in this embodiment of this application, the default transmission direction of the ring network is, for example, a clockwise direction, so that the packet 1 is transmitted to the communications device 1 through the path 1 in the default transmission direction of the ring network. The packet 1 is received at the communications device 1 and forwarded to the MDC.

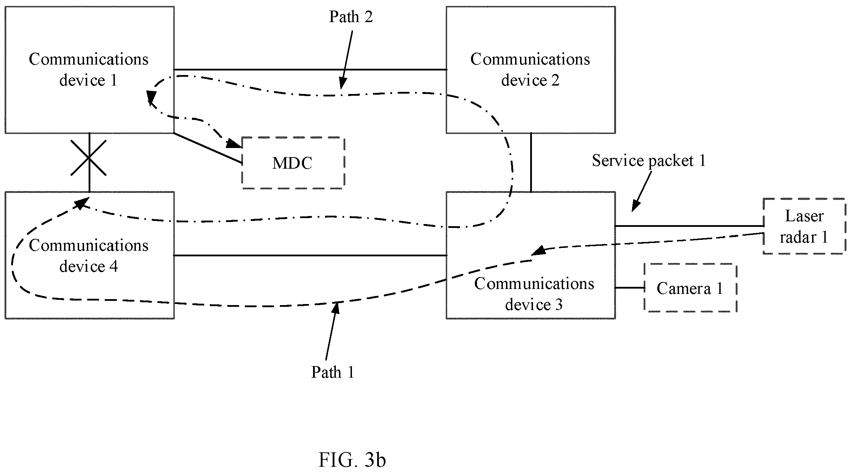

In an abnormal case, for example, when a link between the communications device 4 and the gateway 1 is interrupted, as shown in FIG. 3b, before the communications device 4 detects this failure, the packet 1 is transmitted through the path 1 in the clockwise direction, and after the communications device 4 detects the failure, the communications device 4 performs wrapping, and changes the transmission direction of the packet 1 from the original clockwise direction to the counterclockwise direction. The packet 1 originally sent by the communications device 3 to the communications device 4 is returned to the communications device 3 after wrapping by the communications device 4. After receiving the packet 1 returned by the communications device 4, the communications device 3 does not terminate the packet 1, but continues to transmit the packet 1 to the communications device 2 and the communications device 1. Therefore, after wrapping is performed, the packet 1 is transmitted to the communications device 1 through the path 2 in the counterclockwise direction. Finally, the communications device 1 receives the packet 1 and forwards the packet 1 to the MDC.

It should be noted that the foregoing is merely illustrative description of some application scenarios of the wrapping mechanism in the data transmission system provided in this embodiment of this application, and should not impose any limitation on this embodiment of this application. It may be understood that the data transmission system provided in this embodiment of this application still has other application scenarios for the wrapping mechanism. This is not specifically limited in this embodiment of this application.

Optionally, the communications device in this embodiment of this application may be a vehicle-mounted terminal installed on the vehicle to assist the vehicle in driving, or may be a chip in a vehicle-mounted terminal. The vehicle-mounted terminal may be user equipment (user equipment, UE), an access terminal, a terminal unit, a terminal station, a mobile station, a mobile platform, a remote station, a remote terminal, a mobile device, a wireless communications device, a terminal agent, a terminal apparatus, or the like in a 5th generation (5th generation, 5G) network or a future evolved public land mobile network (public land mobile network, PLMN). The access terminal may be a cellular phone, a cordless phone, a session initiation protocol (session initiation protocol, SIP) phone, a wireless local loop (wireless local loop, WLL) station, a personal digital assistant (personal digital assistant, PDA), a handheld device having a wireless communications function, a computing device, another processing device connected to a wireless modem, a vehicle-mounted device, a wearable device, a virtual reality (virtual reality, VR) terminal device, an augmented reality (augmented reality, AR) terminal device, a wireless terminal in industrial control (industrial control), a wireless terminal in self driving (self driving), or the like. The vehicle-mounted terminal may be movable or fixed.

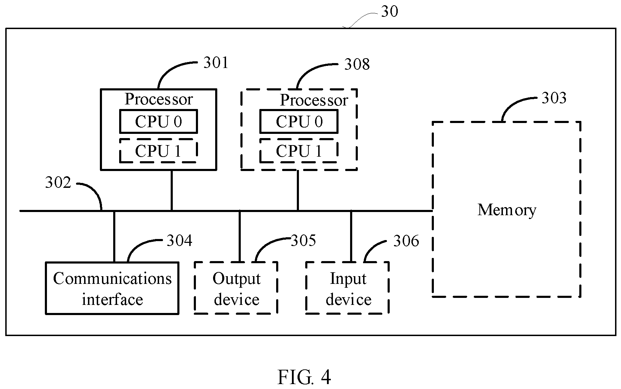

Optionally, the communications device in this embodiment of this application may be implemented by using a communications device (or a communications apparatus) 30 in FIG. 4. FIG. 4 is a schematic structural diagram of the communications device 30 according to an embodiment of this application. The communications device 30 includes one or more processors 301, a communications bus 302, and at least one communications interface (in FIG. 4, only an example in which a communications interface 304 and one processor 301 are included is used for description). Optionally, the communications device 30 may further include a memory 303.

The processor 301 may be a general-purpose central processing unit (central processing unit, CPU), a microprocessor, an application-specific integrated circuit (application-specific integrated circuit, ASIC), or one or more integrated circuits configured to control program execution of the solutions in this application.

The communications bus 302 may be a peripheral component interconnect (peripheral component interconnect, PCI) bus, an extended industry standard architecture (extended industry standard architecture, EISA) bus, or the like. The bus may be classified into an address bus, a data bus, a control bus, and the like. For ease of representation, only one thick line is used to represent the bus in FIG. 4, but this does not mean that there is only one bus or only one type of bus. The communications bus 302 is configured to connect different components in the communications device 30, so that the different components can communicate with each other.

The communications interface 304 may include one or more Ethernet interfaces. Optionally, the communications interface 304 may further include another type of interface, for example, a low-voltage differential signal (low-voltage differential signal, LVDS) interface. This is not specifically limited in this embodiment of this application. The communications interface 304 is configured to communicate with another device or a communications network, for example, a radio access network (radio access network, RAN) or a wireless local area network (wireless local area networks, WLAN). Optionally, the communications interface 304 may be an apparatus such as a transceiver device or a transceiver. Optionally, the communications interface 304 may alternatively be a transceiver circuit located inside the processor 301, and is configured to implement signal input and signal output of the processor.

The memory 303 may be an apparatus having a storage function. For example, the memory may be a read-only memory (read-only memory, ROM) or another type of static storage device capable of storing static information and an instruction, a random access memory (random access memory, RAM) or another type of dynamic storage device capable of storing information and an instruction, an electrically erasable programmable read-only memory (electrically erasable programmable read-only memory, EEPROM), a compact disc read-only memory (compact disc read-only memory, CD-ROM) or another compact disc storage, an optical disc storage (including a compressed optical disc, a laser disc, an optical disc, a digital versatile disc, a blue-ray optical disc, and the like), a magnetic disk storage medium or another magnetic storage device, or any other medium capable of carrying or storing expected program code in a form of an instruction or a data structure and capable of being stored and accessed by a computer. However, the memory is not limited thereto. The memory may exist alone and be connected to the processor by using the communications line 302. Alternatively, the memory may be integrated with the processor.

The memory 303 is configured to store computer-executable instructions for executing the solutions in this application, and the processor 301 controls execution of the computer-executable instructions. The processor 301 is configured to execute the computer-executable instructions stored in the memory 303, to implement the data transmission method provided in the embodiments of this application.

Alternatively, optionally, in the embodiments of this application, the processor 301 may perform processing related functions in a data transmission method provided in the following embodiment of this application, and the communications interface 304 is responsible for communication with another device or a communications network. This is not specifically limited in the embodiments of this application.

Optionally, a computer-executable instruction in this embodiment of this application may also be referred to as application program code. This is not specifically limited in this embodiment of this application.

In specific implementation, in an embodiment, the processor 301 may include one or more CPUs, for example, a CPU 0 and a CPU 1 in FIG. 4.

In specific implementation, in an embodiment, the communications device 30 may include a plurality of processors such as the processor 301 and a processor 308 in FIG. 4. Each of the processors may be a single-core (single-CPU) processor, or may be a multi-core (multi-CPU) processor. The processor herein may be one or more devices, circuits, and/or processing cores configured to process data (for example, a computer program instruction).

In specific implementation, in an embodiment, the communications device 30 may further include an output device 305 and an input device 306. The output device 305 communicates with the processor 301, and may display information in a plurality of manners. For example, the output device 305 may be a liquid crystal display (liquid crystal display, LCD), a light emitting diode (light emitting diode, LED) display device, a cathode ray tube (cathode ray tube, CRT) display device, or a projector (projector). The input device 306 communicates with the processor 301, and may receive an input of a user in a plurality of manners. For example, the input device 306 may be a mouse, a keyboard, a touchscreen device, or a sensing device.

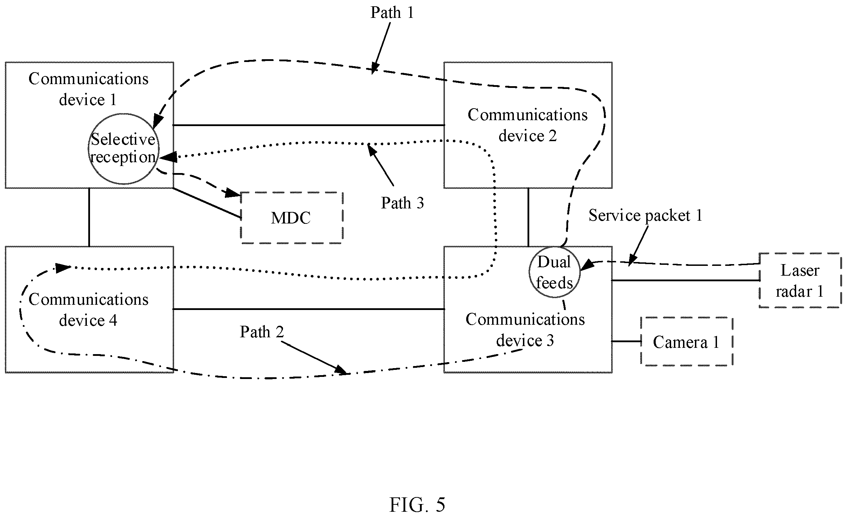

Currently, both a multi-fed and selective receiving mechanism and a wrapping mechanism may be implemented in an Ethernet ring network serving as an in-vehicle network. An example in which the Ethernet ring network included in the data transmission system shown in FIG. 1a is used. In a normal case, as shown in FIG. 1d, the communications device 3 sends two identical packets 1 through the path 1 in the counterclockwise direction and the path 2 in the clockwise direction, and the communications device 1 receives the packet 1 that arrives earlier (in FIG. 1d, an example in which the packet 1 transmitted on the path 1 arrives earlier is used), drops the other redundant packet 1 that arrives later, and forwards the selectively received packet 1 to the MDC. However, in an abnormal case, for example, when a link between the communications device 4 and the communications device 1 is interrupted, as shown in FIG. 5, because the wrapping mechanism is implemented in the Ethernet ring network, after performing wrapping, the communications device 4 returns the packet 1 transmitted by the communications device 3 through the path 2 to the communications device 3, and the communications device 3 continues to transmit the returned packet 1 to the communications device 2 and the communications device 1. Therefore, the packet 1 is transmitted to the communications device 1 through the path 3. In this case, two identical redundant packets 1 are present in the counterclockwise transmission direction of the ring network. This not only causes the communications device 1 to perform unnecessary selective reception, but also leads to a failed purpose of providing reliable transmission for services because two identical packets are transmitted in one direction of the ring network, accompanied with waste of bandwidth. Further, because bandwidth in that direction of the ring network is insufficient to carry two redundant data flows, some service bandwidth may be taken away, so that a service whose bandwidth is taken away is interrupted.

In view of this problem, it is proposed in the conventional technology that a flow-based ACL be manually configured on each gateway of the Ethernet ring network, and judgment is made based on the ACL with respect to source and destination media access control (media access control, MAC) addresses, a virtual local area network (virtual local area network, VLAN) tag, and the like in packets, so as to identify multi-fed redundant packets and prohibit the gateways from forwarding redundant packets that have been wrapped. However, for large amounts of service traffic in the in-vehicle network, manual configuration is rather complex and occupies a large number of ACL entries. In addition, entries on all nodes may possibly be updated due to changes of peripheral devices connected to the gateways or introduction of new communications devices and new service devices (for example, sensor devices) to the ring network, featuring poor scalability.

Based on this, an embodiment of this application provides a data transmission method. The data transmission method is applied to a first communications device in an Ethernet ring network. The first communications device detects a failure on a first Ethernet interface. In the data transmission method, the first Ethernet interface of the first communications device receives a first packet. The first Ethernet interface is an Ethernet interface used by the first communications device for connecting to a second communications device. Then, the first communications device determines whether first indication information in the first packet indicates that the first packet is a multi-fed packet, and when the first indication information indicates that the first packet is a multi-fed packet, the first communications device drops the first packet.

According to the solution in this embodiment of this application, when detecting a failure on the first Ethernet interface, the first communications device identifies a multi-fed packet based on the first indication information and drops the multi-fed packet, thereby avoiding wrapping the multi-fed packet in a wrapping process. In this way, there is no wrapped multi-fed packet in a data transmission system, and transmission of a plurality of redundant packets in one transmission path due to wrapping can be conveniently and efficiently avoided. When a plurality of transmission paths for transmitting multi-fed packets include transmission paths in two transmission directions, clockwise and counterclockwise, of one Ethernet ring network, this can avoid transmitting at least two identical redundant packets in one ring network transmission direction of the Ethernet ring network due to wrapping.

In an implementation scenario of this embodiment of this application, a correspondence between service types or service identifiers and reliability mechanisms may be configured on each communications device in each Ethernet ring network of the data transmission system. The reliability mechanism may be a multi-fed and selective receiving mechanism or a wrapping mechanism. After receiving a service packet from a service device connected to a communications device, the communications device may determine a service type or a service identifier corresponding to the service packet, so that the communications device re-encapsulates the service packet (or in other word, change a frame format of the service packet) based on a reliability mechanism corresponding to the service type or the service identifier.

It should be noted that, in the following embodiments of this application, a reliability mechanism corresponding to a service packet means a reliability mechanism corresponding to a service type or a service identifier corresponding to the service packet. This applies throughout this application and is not noted again in the following embodiments.

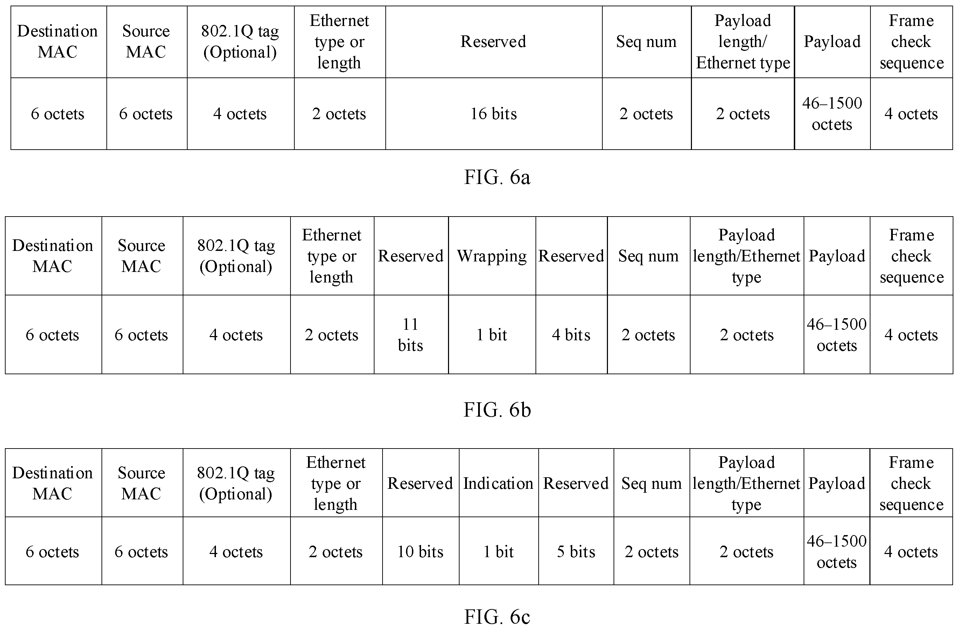

When the reliability mechanism corresponding to the service packet is a multi-fed and selective receiving mechanism, in a possible implementation, the communications device may re-encapsulate the service packet into a packet whose frame format is shown in FIG. 6a. The frame format shown in FIG. 6a is a frame format defined in the IEEE 802.1 CB protocol. At least M identical encapsulated packets are sent through M different transmission paths. In the re-encapsulation process, the communications device does not assign a value to a reserved field in the frame format shown in FIG. 6a. To be specific, a value of the reserved field is a default value (the default value may be protocol-specified, or may be a value generally used in the industry for reserved bits, for example, "0"). However, the communications device may use a default value of a specific bit in the reserved field (for example, the eleventh bit of the reserved field) as first indication information to indicate that the re-encapsulated service packet is a multi-fed packet. To be specific, when the value of the specific bit of the reserved field is the default value, the first indication information indicates that the re-encapsulated service packet is a multi-fed packet.

In this case, when performing wrapping, the communications device that detects a failure on the ring network interface assigns a value to some bits in the reserved field shown in FIG. 6a other than the specific bit whose value is used as the first indication information, to indicate that wrapping has been performed. For example, the twelfth bit of the reserved field is assigned a value. In this case, it may be considered that a frame format of the packet protected by the multi-fed and selective receiving mechanism that has been wrapped is shown in FIG. 6b. To be specific, part of the reserved field of frame defined in the IEEE 802.1 CB protocol is extended to a wrapped (wrapped) field to indicate wrapping. With reference to the first indication information, it may be determined that the packet is a multi-fed packet that has been wrapped.

In another possible implementation, the communications device may extend the frame format shown in FIG. 6a, to extend a specific bit in the reserved field in the frame format shown in FIG. 6a to an indication field. A value of the indication field may be used as first indication information. For example, the indication field is the eleventh bit in the reserved field in the frame format shown in FIG. 6a. An extended frame format may be as shown in FIG. 6c. Then, the communications device may re-encapsulate the service packet coming from the service device into a packet in the frame format shown in FIG. 6c, and send at least M identical encapsulated packets through M different transmission paths. In the re-encapsulation process, the value of the indication field may be set to "0", to indicate that the re-encapsulated packet is a multi-fed packet. Alternatively, the value of the indication field may be set to "1", to indicate that the re-encapsulated packet is a multi-fed packet.

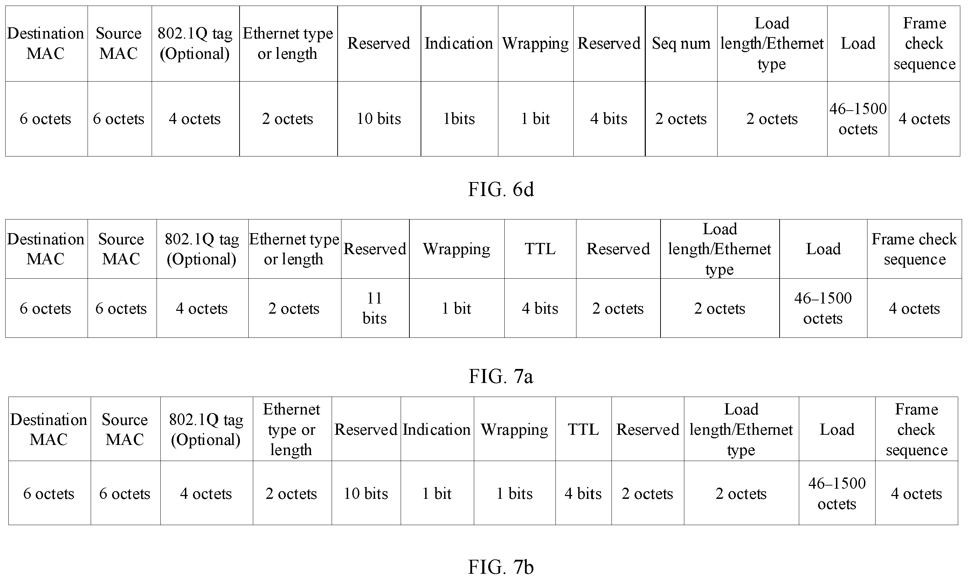

When wrapping is performed in the Ethernet ring network, a specific bit in the second reserved field shown in FIG. 6c may be assigned a value to indicate that wrapping has been performed. For example, the first bit in the second reserved field is assigned a value. In this case, it may be considered that the frame format of the packet protected by the multi-fed and selective receiving mechanism that has been wrapped is shown in FIG. 6d. To be specific, part of the field in the second reserved field in the frame format shown in FIG. 6c is extended to a wrapped field to indicate wrapping.

It should be noted that when the reliability mechanism corresponding to the service packet is a multi-fed and selective receiving mechanism, the communications device may further encapsulate the service packet into a packet whose frame format is another format, as long as the re-encapsulated packet includes the first indication information to indicate that the re-encapsulated packet is a multi-fed packet. This is not specifically limited in this embodiment of this application.

When the reliability mechanism corresponding to the service packet is a wrapping mechanism, in a possible implementation, the communications device may re-encapsulate the service packet into a packet in a frame format shown in FIG. 7a, and send the re-encapsulated packet through the ring network interface in the default transmission direction of the ring network, so that the re-encapsulated packet is transmitted in the ring network in the default transmission direction.

In the frame format shown in FIG. 7a, an Ethernet frame is extended, and a wrapped field and a time to live (time to live, TTL) field are introduced for the wrapping mechanism. The TTL field is used to control a time to live of a packet. Each time a packet is forwarded by a device, 1 is first subtracted from a value of the TTL field. If the value of the TTL field becomes 0 after 1 is subtracted, the packet is no longer forwarded and dropped.

In the re-encapsulation process, the communications device assigns a value to the TTL field without assigning a value to the wrapped field, sets a value of a specific bit (for example, the last bit) in the first reserved field in the frame format shown in FIG. 7a to a value different from the default value (for example, the default value is "0", and the communications device sets it to "1"), and uses the value of the specific bit as the first indication information, to indicate that the re-encapsulated service packet is not a multi-fed packet. In other words, when the value of the specific bit of the first reserved field is different from the default value, the first indication information indicates that the re-encapsulated service packet is not a multi-fed packet.

When wrapping is performed in the Ethernet ring network, the communications device that performs the wrapping may assign a value to the wrapped field in the frame format shown in FIG. 7a and reset the value of the TTL field.

In another possible implementation, the communications device may extend the frame format shown in FIG. 7a, to extend a specific bit in the first reserved field in the frame format shown in FIG. 7a to an indication field. A value of the indication field may be used as first indication information. For example, the indication field is the last bit in the first reserved field in the frame format shown in FIG. 7a. The extended frame format may be as shown in FIG. 7b. Then, the communications device may re-encapsulate the service packet coming from the service device into a packet in the frame format shown in FIG. 7b, and send the re-encapsulated packet through a ring network interface in a default transmission direction of the ring network, so that the re-encapsulated packet is transmitted in the ring network in the default transmission direction. In the re-encapsulation process, a value is assigned to the TTL field but not to the wrapped field, and the value of the indication field may be set to "1", to indicate that the re-encapsulated packet is not a multi-fed packet. Alternatively, the value of the indication field may be set to "0", to indicate that the re-encapsulated packet is not a multi-fed packet.

When wrapping is performed in the Ethernet ring network, the communications device that performs the wrapping may assign a value to the wrapped field in the frame format shown in FIG. 7b and reset the value of the TTL field.

It should be noted that when the reliability mechanism corresponding to the service packet is a wrapping mechanism, the communications device may further encapsulate the service packet into a packet whose frame format is another format, as long as the re-encapsulated packet includes the first indication information to indicate that the re-encapsulated packet is not a multi-fed packet. This is not specifically limited in this embodiment of this application.

It should be noted that the indication field in the frame format shown in FIG. 6c, FIG. 6d, or FIG. 7b may alternatively have another name, for example, a low-latency reliable Ethernet format (low-latency reliable Ethernet format, LLRE format) field. This is not specifically limited in this embodiment of this application.

In another implementation scenario of this embodiment of this application, a frame format of a service packet that is received by each communications device in the Ethernet ring network from a service device connected to the communications device may also be as shown in FIG. 6a or FIG. 6c, indicating that the service device sends multiple replicates of the service packet. When the frame format of the packet is as shown in FIG. 6a, a value of a specific bit in the reserved field of the packet may be used as first indication information to indicate that the service packet is a multi-fed packet. When the frame format of the packet is as shown in FIG. 6c, the value of the indication field of the packet is used as first indication information to indicate that the service packet is a multi-fed packet, and the communications device forwards or selectively receives the multi-fed packet without performing re-encapsulation (or in other words, without changing the frame format).

It may be understood that, for a packet received by a communications device from a processing device, the communications device may also encapsulate and send the packet from the processing device in a manner similar to that for a service packet. Alternatively, a frame format of the packet sent by the processing device may also be as shown in FIG. 6a or FIG. 6c. For detailed implementation, refer to the foregoing related descriptions. Details are not described herein again.

It should be noted that this embodiment of this application is not limited to the data transmission system shown in FIG. 1a, FIG. 1b, or FIG. 1c, and may be further applied to various hybrid topologies of other Ethernet ring network topologies.

It should be noted that names of messages between network elements, names of parameters in the messages, or the like in the following embodiments of this application are merely examples, and there may be other names in specific implementation. This is not specifically limited in embodiments of this application.

With reference to the accompanying drawings, a data transmission method provided in an embodiment of this application is described by using an example in which the data transmission system provided in the embodiment of this application has an Ethernet ring network that includes at least a first communications device, a second communications device, and a third communications device, where the first communications device is connected to the second communications device and the third communications device through Ethernet interfaces, and the first communications device in the Ethernet ring network detects a failure on the first Ethernet interface.

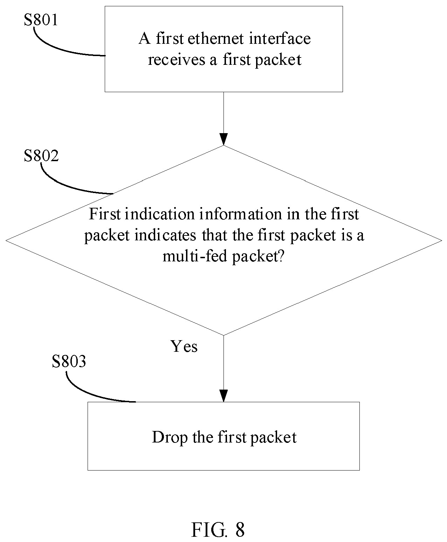

FIG. 8 shows a data transmission method according to an embodiment of this application. The data transmission method includes the following steps.

S801: A first Ethernet interface of a first communications device receives a first packet.

The first Ethernet interface is an Ethernet interface used by the first communications device for connecting to a second communications device.

Optionally, the first Ethernet interface may also be referred to as a first ring network interface, and the two terms are interchangeable. This is not specifically limited in this embodiment of this application.

The first packet includes first indication information. The first packet may be a packet obtained after a communications device in the Ethernet ring network encapsulates a packet received from a service device or a processing device connected to the communications device. Alternatively, the first packet may be a packet sent by a service device and forwarded by a communications device connected to the service device. Alternatively, the packet may be a packet sent by a processing device and forwarded by a communications device connected to the processing device. For detailed descriptions, refer to the foregoing related descriptions. Details are not described herein again.

S802: The first communications device determines whether the first indication information in the first packet indicates that the first packet is a multi-fed packet.

As described above, the first packet includes the first indication information, and the first indication information indicates whether the first packet is a multi-fed packet. In this way, after receiving the first packet, the first communications device may determine whether the first indication information indicates that the first packet is a multi-fed packet. When the first indication information indicates that the first packet is a multi-fed packet, the following step S803 is performed.

For example, when a frame format of the first packet is as shown in FIG. 6a, the first communications device may check a value of a specific bit in a reserved field of the first packet. When the value is a default value, the first communications device determines that the first indication information indicates that the first packet is a multi-fed packet.

S803: The first communications device drops the first packet.

To be specific, when the first indication information indicates that the first packet is a multi-fed packet, the first communications device drops the first packet.

It should be noted that, in this embodiment of this application, dropping the first packet may also be understood as eliminating the first packet, deleting the first packet, or terminating the first packet. These terms are interchangeable and are not specifically limited in this embodiment of this application.

According to the solution in this embodiment of this application, when detecting a failure on the first Ethernet interface, the first communications device identifies a multi-fed packet based on the first indication information and drops the multi-fed packet, thereby avoiding wrapping the multi-fed packet in a wrapping process. In this way, there is no wrapped multi-fed packet in a data transmission system, and transmission of a plurality of redundant packets in one transmission path due to wrapping can be conveniently and efficiently avoided. When a plurality of transmission paths for transmitting multi-fed packets include transmission paths in two transmission directions, clockwise and counterclockwise, of one Ethernet ring network, this can avoid transmitting at least two identical redundant packets in one ring network direction of the Ethernet ring network due to wrapping.

Optionally, in a different implementation scenario of this embodiment of this application, in step S801, the first packet received by the first Ethernet interface of the first communications device may come from different interfaces. For example, the following three cases may exist.

Case 1: The first Ethernet interface of the first communications device receives the first packet looped back by the first Ethernet interface.

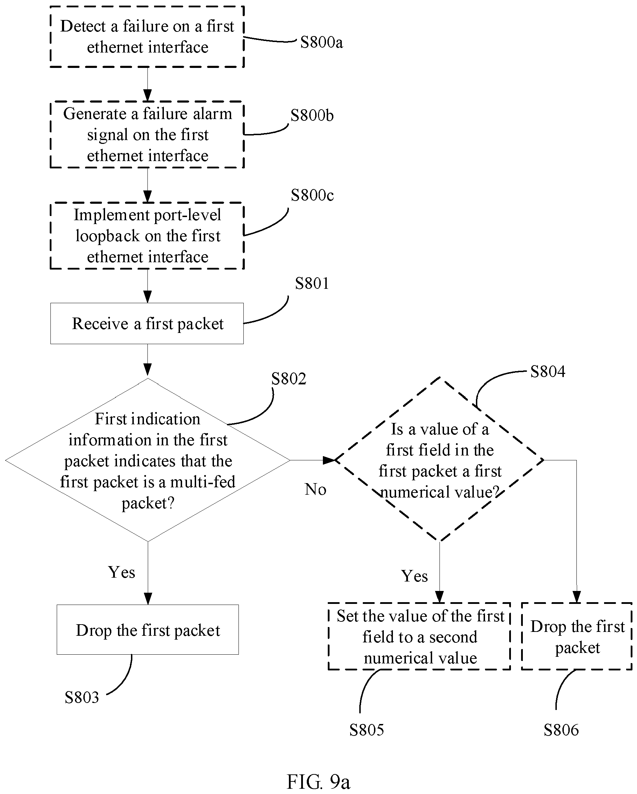

Optionally, in the case 1, as shown in FIG. 9a, before step S801, the data transmission method further includes the following steps S800a to S800c.

S800a: The first communications device detects a failure on the first Ethernet interface.

Optionally, the failure may be a failure of a physical layer of the first Ethernet interface, or may be a failure of a physical medium used for communication between the first communications device and the second communications device (for example, an optical fiber is broken), or may be a failure of the second communications device.

Optionally, before step S800a, a third communications device may receive a service packet from a service device connected to the third communications device. If a frame format of the service packet is as shown in FIG. 6a or FIG. 6c, the service packet is a first packet. The third communications device sends the first packet to a second Ethernet interface of the first communications device. If the frame format of the service packet is different from the frame format shown in FIG. 6a or FIG. 6c, the third communications device encapsulates the service packet into a first packet based on a reliability mechanism corresponding to the service packet, and sends the first packet to the second Ethernet interface of the first communications device. Alternatively, the third communications device may receive a first packet from a fourth communications device connected to the third communications device, and send the first packet to the second Ethernet interface of the first communications device. This is not specifically limited in this embodiment of this application. The fourth communications device and the first communications device are different communications devices, and the second Ethernet interface is an Ethernet interface used by the first communications device for connecting to the third communications device.

Optionally, the second Ethernet interface may also be referred to as a second ring network interface, and the second Ethernet interface and the second ring network interface are interchangeable and are not specifically limited in this embodiment of this application.

Correspondingly, after receiving the first packet, the second Ethernet interface of the first communications device performs a packet receiving procedure. In the packet receiving procedure, if it is determined that a receiver of the first packet is not a service device connected to the first communications device, the first packet is forwarded to the first Ethernet interface of the first communications device, so that the first Ethernet interface of the first communications device forwards the first packet to the second communications device. The packet receiving procedure is described in detail in subsequent embodiments, and details are not described now.

Correspondingly, after receiving the first packet, the first Ethernet interface of the first communications device sends the first packet. Later, the first communications device detects a failure on the first Ethernet interface, and the following step S800b is performed.

Optionally, the first communications device may detect the above failure by using a CCM connectivity detection packet. For example, when the first Ethernet interface receives no CCM connectivity detection packet within 3.5 periods (one period may be 300 microseconds), it may be considered that the first communications device detects a failure on the first Ethernet interface.

S800b: The first communications device generates a failure alarm signal on the first Ethernet interface.

S800c: The first communications device implements port-level loopback on the first Ethernet interface.

Optionally, an implementation point (or an occurrence point) of port-level loopback on the first Ethernet interface may be located at a media independent interface (media independent interface, MII) on a media access control (media access control, MAC) layer of the first Ethernet interface.

Optionally, performing port-level loopback on the first Ethernet interface may include: enabling a loopback point reserved by the first Ethernet interface, to connect a data transmit line on the MII interface at the MAC layer of the first Ethernet interface to a corresponding receive line, and connect a control signal transmit line to a corresponding control signal receive line.

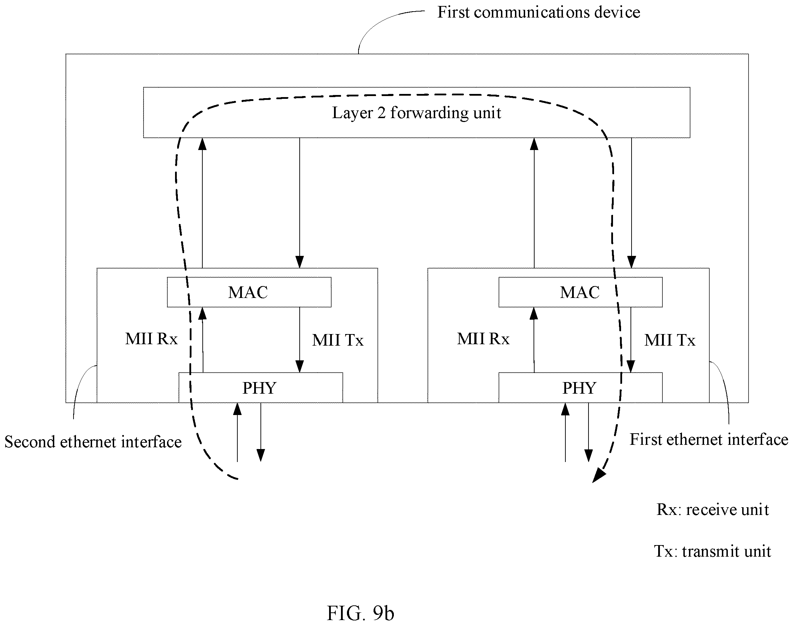

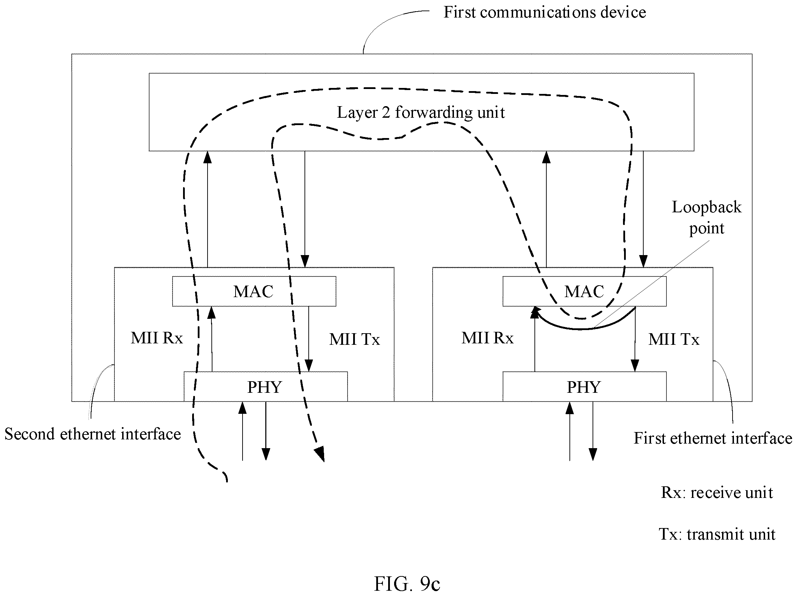

For example, the first Ethernet interface and the second Ethernet interface both include a physical layer (physic, PHY) and a MAC layer. The first communications device further includes a layer 2 (that is, MAC layer) forwarding unit. In a normal case, a forwarding path of the first packet in the first communications device is as shown by a dashed line in FIG. 9b. When the first communications device detects a failure on the first Ethernet interface, loopback is performed on the MII interface at the MAC layer of the first Ethernet interface, and a forwarding path of the first packet in the first communications device is as shown by a dashed line in FIG. 9c.

After port-level loopback is completed on the first Ethernet interface, the first Ethernet interface can receive the first packet sent by the first Ethernet interface before. For example, FIG. 9c is used as an example. The first packet sent by a transmit unit of the MII interface at the MAC layer of the first Ethernet interface may be received by a receive unit of the MII interface. In this case, it is considered that the first Ethernet interface receives the first packet looped back by the first Ethernet interface.

Optionally, in the case 1, when the first indication information indicates that the first packet is not a multi-fed packet, as shown in FIG. 9a, the data transmission method may further include the following steps S804 and S805 or steps S804 to S806.

S804: The first communications device determines whether a value of a first field in the first packet is a first numerical value.

The first field is a field used for the wrapping mechanism, and the value of the first field is used to indicate whether the first packet is a packet that has been wrapped. The value of the first field being the first numerical value, indicates that the first packet is a packet that has not been wrapped. In other words, the first numerical value is used to indicate that a transmission direction of the first packet in the Ethernet ring network has not changed. The first value may be, for example, "0".

For example, when the frame format of the first packet is as shown in FIG. 6b, FIG. 6d, FIG. 7a, or FIG. 7b, the first field may be a wrapped (wrapped) field.

Optionally, when the value of the first field is the first numerical value, the following step S805 is performed. Alternatively, when the value of the first field is a second numerical value, the following step S806 is performed.

Steps S800a to S803, S800a to S805, or S800a to S806 shown in FIG. 9a may be understood as a wrapping process.

S805: The first communications device sets the value of the first field to a second numerical value.

The second numerical value is used to indicate that the first packet is a packet that has been wrapped, or the second numerical value is used to indicate that the transmission direction of the first packet in the Ethernet ring network has changed. The second numerical value may be, for example, "1". To be specific, after port-level loopback is performed on the first Ethernet interface, the first communications device wraps packets that are not multi-fed.

Optionally, after step S805, the first Ethernet interface of the first communications device may forward the first packet to a second Ethernet interface of the first communications device, so that the second Ethernet interface sends the first packet in a transmission direction different from an initial transmission direction, thereby changing the transmission direction of the first packet.

According to this solution, in a wrapping process, the first communications device wraps only packets that are not multi-fed, thereby reducing waste of bandwidth and avoiding unnecessary selective reception by a receive node.

### S806: The first communications device drops the first packet.

The value of the first field being the second numerical value indicates that the first packet has been wrapped. To avoid wrapping again the first packet that has been wrapped, the first communications device may drop the first packet, thereby reducing waste of bandwidth.

Case 2: The first Ethernet interface of the first communications device receives the first packet from a second Ethernet interface of the first communications device.

Optionally, before step S801, a third communications device may receive a service packet from a service device connected to the third communications device. If a frame format of the service packet is as shown in FIG. 6a or FIG. 6c, the service packet is a first packet. The third communications device sends the first packet to a second Ethernet interface of the first communications device. If the frame format of the service packet is different from the frame format shown in FIG. 6a or FIG. 6c, the third communications device encapsulates the service packet into a first packet based on a reliability mechanism corresponding to the service packet, and sends the first packet to the second Ethernet interface of the first communications device. Alternatively, the third communications device may receive a first packet from a fourth communications device connected to the third communications device, and send the first packet to the second Ethernet interface of the first communications device. This is not specifically limited in this embodiment of this application. The fourth communications device and the first communications device are different communications devices.

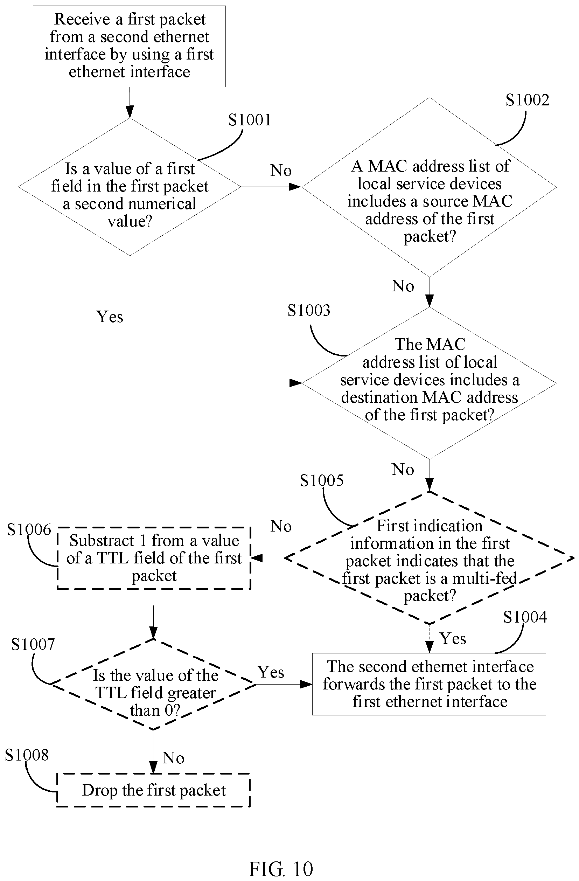

Correspondingly, after receiving the first packet, the second Ethernet interface of the first communications device performs a packet receiving procedure shown in FIG. 10. The packet receiving procedure includes the following steps.

S1001: The first communications device determines whether the value of the first field in the first packet is a second numerical value.

Optionally, when the value of the first field is the second numerical value indicating that the first packet is a packet that has been wrapped, the following step S1003 is performed. Alternatively, when the value of the first field is a first numerical value, indicating that the first packet is a packet that has not been wrapped, the following step S1002 is performed. For descriptions of the first field, the first numerical value, and the second numerical value, refer to related descriptions of the foregoing steps S804 and S805. Details are not described herein again.

S1002: The first communications device determines whether a MAC address list of local service devices includes a source MAC address of the first packet.

The local service device is one or more service devices connected to the first communications device.

Optionally, the first communications device may maintain the MAC address list of local service devices. The MAC address list of local service devices records MAC addresses of service devices that are learned by the first communications device from a service interface, or records MAC addresses of service devices that are statically configured on the service interface. This is not specifically limited in this embodiment of this application.

Optionally, after receiving the first packet, the second Ethernet interface of the first communications device may match the source MAC address of the first packet against the MAC address list of local service devices. When the MAC address list of local service devices includes the source MAC address of the first packet, it is indicated that the first packet is sent by one of the local service devices and not terminated after being forwarded in the Ethernet ring network. Such case is abnormal. In this case, the first communications device drops the first packet. When the MAC address list of local service devices does not include the source MAC address of the first packet, the following step S1003 is performed.

S 1003: The first communications device determines whether the MAC address list of local service devices includes a destination MAC address of the first packet.

Optionally, when the MAC address list of local service devices includes the destination MAC address of the first packet, it is indicated that a receiver of the first packet is one of the local service devices, where the MAC address of the service device is the same as the destination MAC address of the first packet. In this case, After performing corresponding processing (for example, peeling off a packet header) on the first packet based on the frame format of the first packet, the first communications device forwards the first packet to a service interface whose corresponding MAC address is the same as the destination MAC address of the first packet.

Alternatively, when the MAC address list of local service devices does not include the destination MAC address of the first packet, which indicates that the receiver of the first packet is not a local service device, step S1004 is performed.

S1004: The second Ethernet interface of the first communications device forwards the first packet to the first Ethernet interface of the first communications device.

Correspondingly, the first Ethernet interface of the first communications device receives the first packet from the second Ethernet interface of the first communications device.

Optionally, when the frame format of the first packet is as shown in FIG. 7a, or FIG. 7b, before step S1004, the method further includes the following.

S 1005: The first communications device determines whether the first indication information in the first packet indicates that the first packet is a multi-fed packet.

Optionally, when the first indication information indicates that the first packet is not a multi-fed packet, step S1006 is performed. Alternatively, when the first indication information indicates that the first packet is a multi-fed packet, step S1004 is performed.

S1006: The first communications device subtracts 1 from a value of a TTL field of the first packet.

S1007: The first communications device determines whether the value of the TTL field of the first packet is greater than 0.

Optionally, when the value of the TTL field is greater than 0 after 1 is subtracted, step S1004 is performed. Alternatively, when the value of the TTL field is equal to 0 after 1 is subtracted, step S1008 is performed.

S1008: The first communications device drops the first packet.

In this embodiment of this application, an example in which the second Ethernet interface of the first communications device finally forwards the first packet to the first Ethernet interface in the packet receiving procedure shown in FIG. 10 is used for description. Now, the first Ethernet interface of the first communications device can receive the first packet from the second Ethernet interface of the first communications device.

In addition, the first communications device may detect a failure on the first Ethernet interface. For related descriptions of detecting a failure on the first Ethernet interface by the first communications device, refer to the foregoing step S800a. Details are not described herein again. In this case, before port-level loopback is performed on the first Ethernet interface, that is, before step S800c is performed, steps S802 and S803 may be performed. To be specific, before port-level loopback is performed on the first Ethernet interface, the first communications device drops the multi-fed packet, thereby avoiding wrapping the multi-fed packet in a subsequent wrapping process.

It should be noted that, in the case 2, there is no strict sequence between a moment at which the first communications device detects the failure on the first Ethernet interface and a moment at which the first Ethernet interface of the first communications device receives the first packet. The first packet may be received after the failure is detected, or the first packet may be received before the failure is detected, or the failure may be detected at the same time as the first packet is received. In either case, the first communications device drops the multi-fed packet before performing port-level loopback on the first Ethernet interface.

Optionally, in the case 2, when the first indication information indicates that the first packet is not a multi-fed packet, after port-level loopback is performed on the first Ethernet interface, steps S804 and S805 or steps S804 to S806 may be further performed. For detailed descriptions, refer to the foregoing related descriptions, and details are not described herein again.

Case 3: The first Ethernet interface of the first communications device receives the first packet from a first service interface of the first communications device.

The first service interface is an interface used by the first communications device for connecting to the first service device. The first service interface may be an Ethernet interface, or may be an interface of another type. This is not specifically limited in this embodiment of this application.

In a possible implementation, before the first Ethernet interface of the first communications device receives the first packet from the first service interface of the first communications device, the data transmission method further includes that the first service device sends the first packet to the first service interface of the first communications device. The first indication information in the first packet indicates that the first packet is a multi-fed packet. Correspondingly, the first service interface of the first communications device receives the first packet from the first service device. This means that the first service device sends multiple replicates of service packets. To be specific, the first service device sends a plurality of identical first packets. Correspondingly, the first communications device forwards the first packet. To be specific, the first service interface of the first communications device forwards the first packet to the first Ethernet interface of the first communications device. Now, the first Ethernet interface of the first communications device can receive the first packet from the first service interface.

In another possible implementation, before the first Ethernet interface of the first communications device receives the first packet from the first service interface of the first communications device, the data transmission method further includes that the first service device sends a second packet to the first communications device. The second packet is not a multi-fed packet. Correspondingly, the first service interface of the first communications device receives the second packet from the first service device. Then, the first communications device re-encapsulates the second packet into a first packet based on a reliability mechanism corresponding to the second packet. When the reliability mechanism corresponding to the second packet is a multi-fed and selective receiving mechanism, first indication information in the re-encapsulated first packet indicates that the first packet is a multi-fed packet. When the reliability mechanism corresponding to the second packet is a wrapping mechanism, first indication information in the re-encapsulated first packet indicates that the first packet is not a multi-fed packet.

Optionally, after re-encapsulating the second packet into a first packet, the first communications device replicates the first packet, and forwards the first packet to the first Ethernet interface and the second Ethernet interface of the first communications device through the first service interface of the first communications device, so that the first Ethernet interface and the second Ethernet interface forward the first packet to the second communications device and the third communications device respectively. Now, the first Ethernet interface of the first communications device can receive the first packet from the first service interface.

In addition, the first communications device may detect a failure on the first Ethernet interface. For related descriptions of detecting a failure on the first Ethernet interface by the first communications device, refer to the foregoing step S800a. Details are not described herein again. In this case, before port-level loopback is performed on the first Ethernet interface, that is, before step S800c is performed, steps S802 and S803 may be performed. To be specific, before port-level loopback is performed on the first Ethernet interface, the first communications device drops the multi-fed packet, thereby avoiding wrapping the multi-fed packet in a subsequent wrapping process.

It should be noted that, in the case 3, there is no strict sequence between a moment at which the first communications device detects the failure on the first Ethernet interface and a moment at which the first Ethernet interface of the first communications device receives the first packet. The first packet may be received after the failure is detected, or the first packet may be received before the failure is detected, or the failure may be detected at the same time as the first packet is received. In either case, the first communications device drops the multi-fed packet before performing port-level loopback on the first Ethernet interface.

Optionally, in the case 3, when the first indication information indicates that the first packet is not a multi-fed packet, after port-level loopback is performed on the first Ethernet interface, steps S804 and S805 or steps S804 to S806 may be further performed. For detailed descriptions, refer to the foregoing related descriptions, and details are not described herein again.

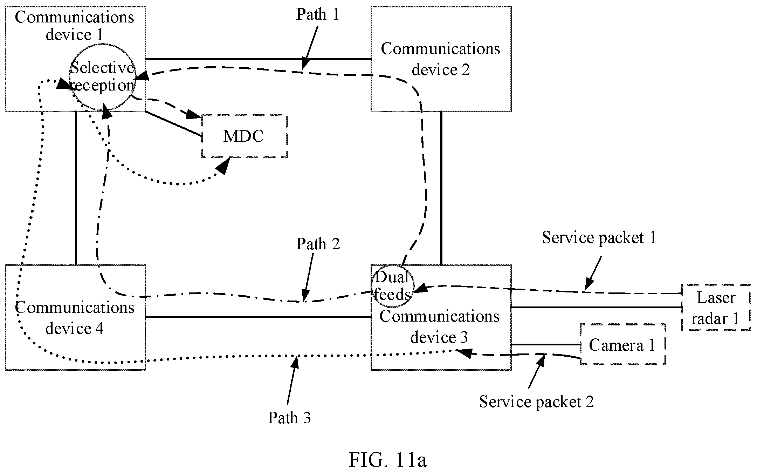

For example, the dual-fed and selective receiving mechanism applied to the Ethernet ring network in the data transmission system shown in FIG. 1a is used as an example. It is assumed that the first communications device is the communications device 4, the second communications device is the communications device 1, and the third communications device is the communications device 3. The communications device 3 encapsulates a service packet 1 from the laser radar 1 into a packet 1, and encapsulates a service packet 2 from the camera 1 into a packet 2. First indication information in the packet 1 indicates that the packet 1 is a multi-fed packet. First indication information in the packet 2 indicates that the packet 2 is not a multi-fed packet. Without any failed link or failed communications device in the Ethernet ring network, as shown in FIG. 11a, the communications device 3 transmits the packet 1 to the communications device 1 through the path 1 in the counterclockwise direction and the path 2 in the clockwise direction of the Ethernet ring network, and the communications device 1 selectively receives and forwards the packet 1 to the MDC; and the communications device 3 transmits the packet 2 to the communications device 1 through the path 3 in a default transmission direction (a clockwise direction is used as an example) of the ring network, and the communications device 1 forwards the packet 2 to the MDC.

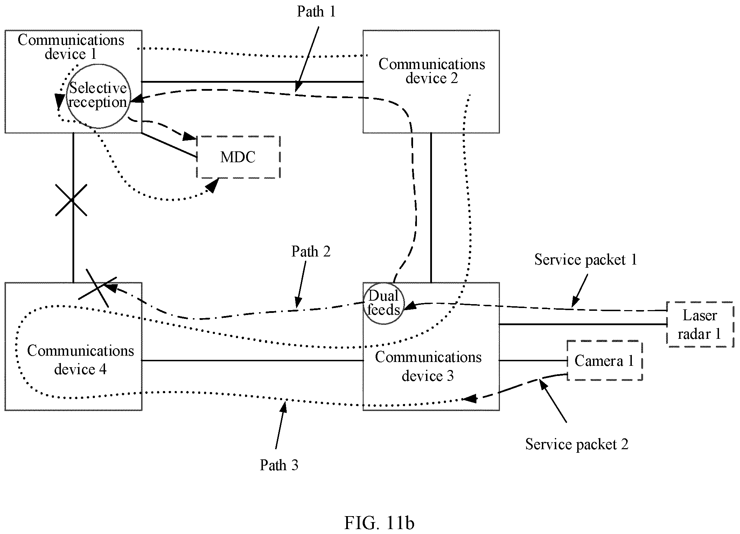

When the communications device 4 detects a failure on the first Ethernet interface, after the packet 1 and the packet 2 are forwarded to the first Ethernet interface, the communications device 4 performs the data transmission method shown in FIG. 8. To be specific, the communications device 4 wraps the packet 2 normally and drops the packet 1. To be specific, as shown in FIG. 11b, the communications device 4 drops the packet 1 transmitted on the path 2 and wraps the packet 2. In this case, the packet 1 is transmitted to the communications device 1 through the path 1, and is forwarded to the MDC by the communications device 1. The packet 2 that has been wrapped is transmitted to the communications device 1 through the path 3, and is forwarded to the MDC by the communications device 1.

It should be noted that when the multi-fed and selective receiving mechanism is applied to a plurality of Ethernet ring networks, for descriptions of application of the data transmission method shown in FIG. 8, refer to related descriptions of the dual-fed and selective receiving mechanism applied to the Ethernet ring network shown in FIG. 1a, and details are not described herein again.

With reference to the accompanying drawings, another data transmission method provided in an embodiment of this application is described by using an example in which the data transmission system provided in the embodiments of this application has an Ethernet ring network that includes at least a first communications device, a second communications device, and a third communications device, where the first communications device is connected to the second communications device and the third communications device through Ethernet interfaces.

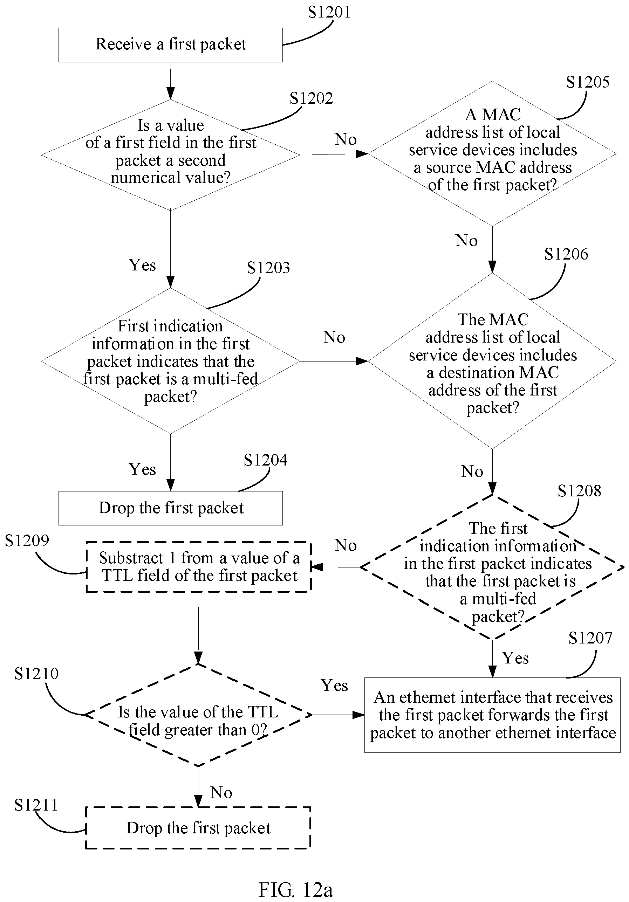

FIG. 12a shows another data transmission method according to an embodiment of this application. The data transmission method may be understood as a packet receiving procedure of a communications device. The data transmission method includes the following steps.

S1201: A first communications device receives a first packet.

That the first communications device receives a first packet may be that a first Ethernet interface of the first communications device receives the first packet looped back by the first Ethernet interface. Alternatively, that the first communications device receives a first packet may be that a second Ethernet interface of the first communications device receives the first packet from a third communications device. For detailed descriptions, refer to the foregoing related descriptions, and details are not described herein again.

Optionally, when the first Ethernet interface of the first communications device receives the first packet looped back by the first Ethernet interface, before step S 1201, the data transmission method further includes the following steps.

Steps S1200a to S1200c are the same as steps S800a to S800c in the embodiment shown in FIG. 9a. For related descriptions, refer to the embodiment shown in FIG. 9a, and details are not described herein again.

S 1200d: The first communications device determines whether a value of a first field in the first packet is a first numerical value.

This step is the same as step S804 in the embodiment shown in FIG. 9a. For related descriptions, refer to the embodiment shown in FIG. 9a. Details are not described herein again.

Optionally, when the value of the first field is the first numerical value, the following step S1200e is performed. Alternatively, when the value of the first field is a second numerical value, the following step S 1200f is performed.

S1200e: The first communications device sets the value of the first field to the second numerical value.

This step is the same as step S805 in the embodiment shown in FIG. 9a. To be specific, after port-level loopback is performed on the first Ethernet interface, the first communications device modifies the value of the first field in the first packet.

After step S1200e, the first Ethernet interface of the first communications device receives the first packet that has been wrapped and that is looped back by the first Ethernet interface.

S 1200f: The first communications device drops the first packet.

This step is the same as step S806 in the embodiment shown in FIG. 9a. For related descriptions, refer to the embodiment shown in FIG. 9a. Details are not described herein again.

To be specific, in this case, after detecting a failure on the first Ethernet interface, the first communications device performs port-level loopback on the first Ethernet interface, and wraps all packets arriving at the first Ethernet interface after the loopback is completed. Then, the packet receiving procedure shown in FIG. 12a is performed.

S1202: The first communications device determines whether a value of a first field in the first packet is a second numerical value.

Because the wrapping procedure is decoupled from the packet receiving procedure, even if the value of the first field is set to the second numerical value in the wrapping process when the first Ethernet interface of the first communications device receives the first packet looped back by the first Ethernet interface, in the packet receiving procedure, step S 1202 still needs to be performed for making determination.

Optionally, when the value of the first field is the second numerical value, the following step S1203 is performed. Alternatively, when the value of the first field is the first numerical value, the following step S1205 is performed.

S1203: The first communications device determines whether first indication information in the first packet indicates that the first packet is a multi-fed packet.

Optionally, when the first indication information indicates that the first packet is a multi-fed packet, the following step S1204 is performed. Alternatively, when the first indication information indicates that the first packet is not a multi-fed packet, the following step S1206 is performed.

S1204: The first communications device drops the first packet.

To be specific, when the value of the first field in the first packet is the second numerical value, and the first indication information in the first packet indicates that the first packet is a multi-fed packet, the first communications device drops the first packet. In other words, the first communications device drops the multi-fed packet that has been wrapped.

S1205: The first communications device determines whether a MAC address list of local service devices includes a source MAC address of the first packet.

This step is the same as step S1002 in the embodiment shown in FIG. 10. For related descriptions, refer to the embodiment shown in FIG. 10. Details are not described herein again.

Optionally, when the MAC address list of local service devices does not include the source MAC address of the first packet, the following step S1206 is performed.

S1206: The first communications device determines whether the MAC address list of local service devices includes a destination MAC address of the first packet.

This step is the same as step S1003 in the embodiment shown in FIG. 10. For related descriptions, refer to the embodiment shown in FIG. 10. Details are not described herein again.

Optionally, when the MAC address list of local service devices does not include the destination MAC address of the first packet, which indicates that the receiver of the first packet is not a local service device, step S1207 is performed.

S1207: An Ethernet interface that receives the first packet in the first communications device forwards the first packet to another Ethernet interface in the first communications device.

When the first Ethernet interface of the first communications device receives the first packet looped back by the first Ethernet interface in step S1201, the first Ethernet interface of the first communications device forwards the first packet to the second Ethernet interface of the first communications device. When the second Ethernet interface of the first communications device receives the first packet from the third communications device in step S1201, the second Ethernet interface of the first communications device forwards the first packet to the first Ethernet interface of the first communications device.

Optionally, when a frame format of the first packet is as shown in FIG. 7a or FIG. 7b, before step S1207, the method further includes the following.

S1208: The first communications device determines whether the first indication information in the first packet indicates that the first packet is a multi-fed packet.

Optionally, when the first indication information indicates that the first packet is not a multi-fed packet, step S1209 is performed. Alternatively, when the first indication information indicates that the first packet is a multi-fed packet, step S1207 is performed.

S1209: The first communications device subtracts 1 from a value of a TTL field of the first packet.

S1210: The first communications device determines whether the value of the TTL field of the first packet is greater than 0.

Optionally, when the value of the TTL field is greater than 0 after 1 is subtracted, step S1207 is performed. Alternatively, when the value of the TTL field is equal to 0 after 1 is subtracted, step S1211 is performed.

S1211: The first communications device drops the first packet.

According to the solution in this embodiment of this application, in packet reception, a communications device in the Ethernet ring network can identify a multi-fed packet based on first indication information and drop a multi-fed packet that has been wrapped. In this way, transmission of a plurality of redundant packets in one transmission path can be avoided conveniently and efficiently. When a plurality of transmission paths for transmitting multi-fed packets include transmission paths in two transmission directions, clockwise and counterclockwise, of one Ethernet ring network, this can avoid transmitting at least two identical redundant packets in one ring network direction of the Ethernet ring network due to wrapping.

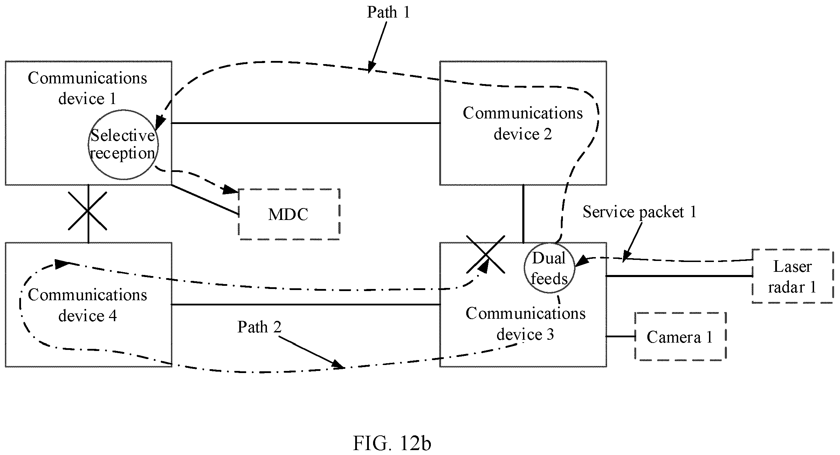

For example, the dual-fed and selective receiving mechanism applied to the Ethernet ring network in the data transmission system shown in FIG. 1a is used as an example. It is assumed that the first communications device is the communications device 3, the second communications device is the communications device 2, and the third communications device is the communications device 3. The second Ethernet interface of the first communications device receives the first packet from the third communications device. As shown in FIG. 12b, the communications device 3 first transmits two first packets through the path 1 in the counterclockwise direction and the path 2 in the clockwise direction of the Ethernet ring network. If the communications device 4 detects a failure on the ring network interface and performs wrapping, the communications device 4 sends the first packet that has been wrapped to the communications device 3. After receiving the first packet from the communications device 4, the communications device 3 detects the first field and the first indication information in the first packet. When the value of the first field is the second numerical value and the first indication information indicates that the first packet is a multi-fed packet, that is, when the communications device 3 determines that the first packet is a multi-fed packet that has been wrapped, the communications device 3 drops the first packet, thereby avoiding transmitting two identical first packets on the path 1.

It should be noted that when the multi-fed and selective receiving mechanism is applied to a plurality of Ethernet ring networks, for descriptions of application of the data transmission method shown in FIG. 12a, refer to the related descriptions of the dual-fed and selective receiving mechanism applied to the Ethernet ring network shown in FIG. 1a. Details are not described herein again.

It may be understood that in the embodiments of this application, the first communications device may perform some or all of the steps in the embodiments of this application, and these steps or operations are merely examples. In embodiments of this application, other operations or various operation variants may further be performed. In addition, the steps may be performed in a sequence different from the sequence presented in the embodiments of this application, and not all the operations in the embodiments of this application are necessarily performed.

In embodiments of this application, unless otherwise stated or in the presence of a logic conflict, terms and/or descriptions are consistent between different embodiments and may be mutually referenced, and technical features in different embodiments may be combined based on an internal logical relationship thereof, to form a new embodiment.

It may be understood that, in the foregoing embodiments, the method and/or the steps implemented by the first communications device may be alternatively implemented by a component (for example, a chip or a circuit) that can be used in the first communications device.

The solutions provided in embodiments of this application are mainly described above from the perspective of interaction between network elements. Correspondingly, an embodiment of this application further provides a communications apparatus, and the communications apparatus is configured to implement the foregoing methods. The communications apparatus may be the first communications device in the foregoing method embodiments, for example, a vehicle-mounted communications apparatus, or an apparatus including the first communications device, for example, various types of vehicles, or an apparatus included in the first communications device, for example, a chip or a system chip. It can be understood that, to implement the foregoing functions, the communications apparatus includes a corresponding hardware structure and/or software module for performing the functions. A person skilled in the art should easily be aware that, in combination with units and algorithm steps in the examples described in embodiments disclosed in this specification, this application may be implemented by hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

In embodiments of this application, the communications apparatus may be divided into function modules based on the foregoing method embodiments. For example, division into the function modules may be based on corresponding functions, or two or more functions may be integrated into one processing module. The integrated module may be implemented in a form of hardware, or may be implemented in a form of a software functional module. It should be noted that, the division into modules in this embodiment of this application is an example, which is merely logical function based division. In actual implementation, another division manner may be used.

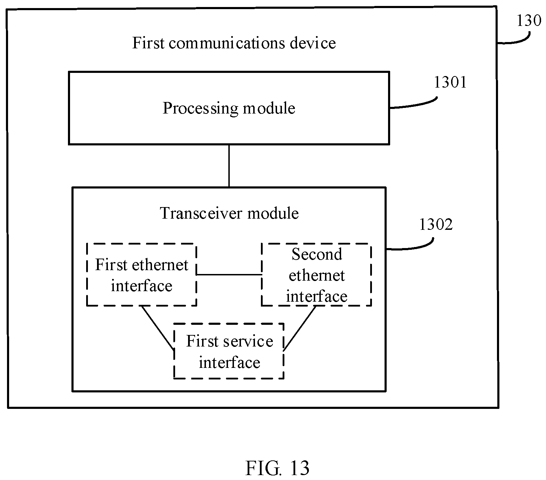

For example, the communications apparatus is the first communications device in the foregoing method embodiments. FIG. 13 is a schematic structural diagram of a first communications device 130. The first communications device 130 includes a processing module 1301 and a transceiver module 1302. The transceiver module 1302 may also be referred to as a transceiver unit, and is configured to implement a sending function and/or a receiving function, for example, may be a transceiver circuit, a transceiver, a transceiver device, or a communications interface.

The transceiver module 1302 may include a receiving module and a sending module, which are respectively configured to perform receiving steps and sending steps performed by the first communications device in the foregoing method embodiments. The processing module 1301 may be configured to perform other steps than the receiving steps and sending steps performed by the first communications device in the foregoing method embodiments.

Optionally, the transceiver module 1302 may include one or more of the first Ethernet interface, the second Ethernet interface, or the first service interface.

In a possible implementation, the transceiver module 1302 is configured to receive a first packet through a first Ethernet interface, and a processing module 1301 is configured to determine whether first indication information in the first packet indicates that the first packet is a multi-fed packet. When the first indication information indicates that the first packet is a multi-fed packet, the processing module 1301 is further configured to drop the first packet.

Optionally, that the transceiver module 1302 is configured to receive a first packet through a first Ethernet interface includes that the transceiver module 1302 is configured to receive the first packet looped back by the first Ethernet interface through the first Ethernet interface.

Optionally, that the transceiver module 1302 is configured to receive a first packet through a first Ethernet interface includes that the transceiver module 1302 is configured to receive the first packet from a second Ethernet interface through the first Ethernet interface.

Optionally, that the transceiver module 1302 is configured to receive a first packet through a first Ethernet interface includes that the transceiver module 1302 is configured to receive the first packet from a first service interface through the first Ethernet interface.

Optionally, the transceiver module 1302 is further configured to receive the first packet from a first service device through the first service interface. The first indication information in the first packet indicates that the first packet is a multi-fed packet. The transceiver module 1302 is further configured to forward the first packet to the first Ethernet interface through the first service interface.

Optionally, the transceiver module 1302 is further configured to receive a second packet from the first service device through the first service interface. The processing module 1301 is further configured to re-encapsulate the second packet into the first packet. When a reliability mechanism corresponding to the second packet is a multi-fed and selective receiving mechanism, the first indication information indicates that the first packet is a multi-fed packet. When the reliability mechanism corresponding to the second packet is a wrapping mechanism, the first indication information indicates that the first packet is not a multi-fed packet. The transceiver module 1302 is further configured to forward the first packet to the first Ethernet interface through the first service interface.

Optionally, when the first indication information indicates that the first packet is not a multi-fed packet, and a value of a first field in the first packet is a first numerical value, the processing module 1301 is further configured to set the value of the first field to a second numerical value. The first numerical value is used to indicate that a transmission direction of the first packet in an Ethernet ring network has not changed, and the second numerical value is used to indicate that the transmission direction of the first packet in the Ethernet ring network has changed. The transceiver module 1302 is further configured to forward the first packet to the second Ethernet interface through the first Ethernet interface.

In another possible implementation, the transceiver module 1302 is configured to receive a first packet. When a value of a first field in the first packet is a second numerical value, and first indication information in the first packet indicates that the first packet is a multi-fed packet, the processing module 1302 is configured to drop the first packet. The second numerical value is used to indicate that a transmission direction of the first packet in an Ethernet ring network has changed.

Optionally, the first communications device detects a failure on the first Ethernet interface. That the transceiver module 1302 is configured to receive a first packet includes that the transceiver module 1302 is configured to receive the first packet looped back by a first Ethernet interface through the first Ethernet interface.

Optionally, that the transceiver module 1302 is configured to receive a first packet includes that the transceiver module 1302 is configured to receive the first packet from a third communications device through a second Ethernet interface.

By reference, all related content of the steps in the foregoing method embodiments may be incorporated to the description of functions of a corresponding function module, and details are not described herein again.

In this embodiment, the first communications device 130 is presented by dividing into functional modules through integration. Herein, "module" may be a specific ASIC, a circuit, a processor that executes one or more software or firmware programs and a memory, an integrated logic circuit, and/or another component that can provide the foregoing functions. In a simple embodiment, a person skilled in the art can figure out that the first communications device 130 may use a form of the communications device 30 shown in FIG. 4.

For example, the processor 301 in the communications device 30 shown in FIG. 4 may invoke the computer-executable instructions stored in the memory 303, to enable the communications device 30 to perform the data transmission method in the foregoing method embodiments.

For example, functions/implementation processes of the processing module 1301 and the transceiver module 1302 in FIG. 13 may be implemented by the processor 301 in the communications device 30 shown in FIG. 4 by invoking the computer-executable instructions stored in the memory 303. Alternatively, a function/an implementation process of the processing module 1301 in FIG. 13 may be implemented by the processor 301 in the communications device 30 shown in FIG. 4 by invoking the computer-executable instructions stored in the memory 303, and a function/an implementation process of the transceiver module 1302 in FIG. 13 may be implemented by the communications interface 304 in the communications device 30 shown in FIG. 4.

Because the first communications device 130 provided in this embodiment can perform the foregoing data transmission method, for a technical effect that can be achieved by the first communications device 130, refer to the foregoing method embodiment. Details are not described herein again.

Optionally, an embodiment of this application further provides a computer-readable storage medium. The computer-readable storage medium stores an instruction. When the instruction runs on the communications apparatus, the communications apparatus is enabled to perform the method according to any one of the foregoing aspects.

Alternatively, optionally, an embodiment of this application further provides a computer program product including an instruction. When the instruction runs on the foregoing communications apparatus, the communications apparatus is enabled to perform the method according to any one of the foregoing aspects.

Alternatively, optionally, an embodiment of this application further provides a communications apparatus (for example, the communications apparatus may be a chip or a chip system). The communications apparatus includes a processor, configured to implement the method according to any one of the foregoing method embodiments. In a possible design, the communications apparatus further includes a memory. The memory is configured to store necessary program instructions and data. The processor may invoke program code stored in the memory, to instruct the communications apparatus to perform the method according to any one of the foregoing method embodiments. Certainly, the memory may alternatively not be located in the communications apparatus. In another possible design, the communications apparatus further includes an interface circuit. The interface circuit is a code/data read/write interface circuit, and the interface circuit is configured to receive computer-executable instructions (where the computer-executable instructions are stored in a memory, and may be directly read from the memory or pass through another component), and transmit the computer-executable instructions to the processor. When the communications apparatus is a chip system, the communications apparatus may include a chip, or may include a chip and another discrete component. This is not specifically limited in this embodiment of this application.

In the foregoing embodiment, it may be understood that the communications apparatus does not necessarily include a memory, and the communications apparatus may perform a corresponding function by invoking an instruction in an external memory. Alternatively, a corresponding program instruction may be loaded into a memory in the communications apparatus at a later stage, for invocation by the processor to perform a corresponding operation.

All or some of the foregoing embodiments may be implemented by using software, hardware, firmware, or any combination thereof. When a software program is used to implement the embodiments, all or some of the embodiments may be implemented in a form of a computer program product. The computer program product includes one or more computer instructions. When the computer program instructions are loaded and executed on a computer, all or some of the procedures or functions according to the embodiments of this application are generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive (solid-state drive, SSD)), or the like. In this embodiment of this application, the computer may include the apparatus described above.

In the claims, "comprising" (comprising) does not exclude another component or another step, and "a" or "one" does not exclude a case of a plurality. A single processor or another unit may implement several functions listed in the claims. Some measures are recorded in dependent claims that are different from each other, but this does not mean that these measures cannot be combined to produce a better effect.

The specification and accompanying drawings are merely example descriptions of this application defined by the accompanying claims.

## Claims

1. A data transmission method, wherein the data transmission method is applied to a first communications device in an Ethernet ring network, the first communications device detects (S800a) a failure on a first Ethernet interface, and the method comprises:
receiving (S801), by the first Ethernet interface of the first communications device, a first packet, wherein the first Ethernet interface is an Ethernet interface used by the first communications device for connecting to a second communications device;
determining (S802), by the first communications device, whether first indication information in the first packet indicates that the first packet is a multi-fed packet in a multi-fed and selective receiving mechanism which means that a source device sends at least M identical packets to a destination device through M different transmission paths, and the destination device receives one of the at least M identical packets and drops the other redundant packets in the at least M packets, where M is a positive integer greater than or equal to 2, wherein the multi-fed packet is any one of the at least M identical packets transmitted on the M different transmission paths between the source device and the destination device; and
dropping (S803), by the first communications device, the first packet when the first indication information indicates that the first packet is a multi-fed packet.

2. The method according to claim 1, wherein the receiving, by the first Ethernet interface of the first communications device, a first packet comprises:
receiving (S800c), by the first Ethernet interface of the first communications device, the first packet looped back by the first Ethernet interface.

3. The method according to claim 1, wherein the receiving, by the first Ethernet interface of the first communications device, a first packet comprises:
receiving, by the first Ethernet interface of the first communications device, the first packet from a second Ethernet interface of the first communications device.

4. The method according to claim 1, wherein the receiving, by the first Ethernet interface of the first communications device, a first packet comprises:
receiving, by the first Ethernet interface of the first communications device, the first packet from a first service interface of the first communications device, wherein the first service interface is an interface used by the first communications device for connecting to a first service device.

5. The method according to claim 4, wherein the method further comprises:
receiving, by the first service interface of the first communications device, the first packet from the first service device, wherein the first indication information in the first packet indicates that the first packet is a multi-fed packet; and
forwarding, by the first service interface of the first communications device, the first packet to the first Ethernet interface of the first communications device.

6. The method according to claim 4, wherein the method further comprises:
receiving, by the first service interface of the first communications device, a second packet from the first service device;
re-encapsulating, by the first communications device, the second packet into the first packet, wherein when a reliability mechanism corresponding to the second packet is a multi-fed and selective receiving mechanism, the first indication information indicates that the first packet is a multi-fed packet, and when the reliability mechanism corresponding to the second packet is a wrapping mechanism, the first indication information indicates that the first packet is not a multi-fed packet; and
forwarding, by the first service interface of the first communications device, the first packet to the first Ethernet interface of the first communications device.

7. The method according to claim 6, wherein the method further comprises:
forwarding, by the first service interface of the first communications device, the first packet to a second Ethernet interface of the first communications device.

8. The method according to any one of claims 1 to 7, wherein the method further comprises:
when the first indication information indicates that the first packet is not a multi-fed packet, and a value of a first field in the first packet is a first numerical value (S804), setting (S805), by the first communications device, the value of the first field to a second numerical value, wherein the first numerical value is used to indicate that a transmission direction of the first packet in the Ethernet ring network has not changed, and the second numerical value is used to indicate that the transmission direction of the first packet in the Ethernet ring network has changed; and
forwarding, by the first Ethernet interface of the first communications device, the first packet to the second Ethernet interface of the first communications device.

9. A communications apparatus (130), wherein the communications apparatus (130) is a first communications device in an Ethernet ring network, the communications apparatus (130) detects a failure on a first Ethernet interface, the communications apparatus (130) comprises a transceiver module (1302) and a processing module (1301), and the transceiver module (1302) comprises the first Ethernet interface, wherein
the transceiver module (1302) is configured to receive a first packet through the first Ethernet interface; the processing module (1301) is configured to determine whether first indication information in the first packet indicates that the first packet is a multi-fed packet in a multi-fed and selective receiving mechanism which means that a source device sends at least M identical packets to a destination device through M different transmission paths, and the destination device receives one of the at least M identical packets and drops the other redundant packets in the at least M packets, where M is a positive integer greater than or equal to 2, wherein the multi-fed packet is any one of the at least M identical packets transmitted on the M different transmission paths between the source device and the destination device; and
when the first indication information indicates that the first packet is a multi-fed packet, the processing module (1301) is further configured to drop the first packet.

10. The communications apparatus according to claim 9, wherein that the transceiver module is configured to receive a first packet through the first Ethernet interface comprises:
the transceiver module is configured to receive the first packet looped back by the first Ethernet interface through the first Ethernet interface.

11. The communications apparatus according to claim 9, wherein the transceiver module further comprises a second Ethernet interface, and that the transceiver module is configured to receive a first packet through the first Ethernet interface comprises:
the transceiver module is configured to receive the first packet from the second Ethernet interface through the first Ethernet interface.

12. The communications apparatus according to claim 9, wherein the transceiver module further comprises a first service interface, and that the transceiver module is configured to receive a first packet through the first Ethernet interface comprises:
the transceiver module is configured to receive the first packet from the first service interface through the first Ethernet interface.

## Patentansprüche

1. Datenübertragungsverfahren, wobei das Datenübertragungsverfahren auf eine erste Kommunikationsvorrichtung in einem Ethernetring-Netzwerk angewendet wird, die erste Kommunikationsvorrichtung einen Fehler an einer ersten Ethernet-Schnittstelle erkennt (S800a), und das Verfahren Folgendes umfasst:
Empfangen (S801) eines ersten Pakets durch die erste Ethernet-Schnittstelle der ersten Kommunikationsvorrichtung, wobei die erste Ethernet-Schnittstelle eine Ethernet-Schnittstelle ist, die von der ersten Kommunikationsvorrichtung zum Verbinden mit einer zweiten Kommunikationsvorrichtung verwendet wird;
Bestimmen (S802) durch die erste Kommunikationsvorrichtung, ob erste Angabeinformationen in dem ersten Paket angeben, dass das erste Paket ein mehrfach gespeistes Paket in einem mehrfach gespeisten und selektiven Empfangsmechanismus ist, was bedeutet, dass eine Quellvorrichtung mindestens M identische Pakete über M verschiedene Übertragungspfade an eine Zielvorrichtung sendet und die Zielvorrichtung eines der mindestens M identischen Pakete empfängt und die anderen redundanten Pakete in den mindestens M Paketen verwirft, wobei M eine positive Ganzzahl größer oder gleich 2 ist, wobei das mehrfach gespeiste Paket eines der mindestens M identischen Pakete ist, die auf den M verschiedenen Übertragungspfaden zwischen der Quellvorrichtung und der Zielvorrichtung übertragen werden; und
Löschen (S803) des ersten Pakets durch die erste Kommunikationsvorrichtung, wenn die ersten Anzeigeinformationen angeben, dass das erste Paket ein mehrfach gespeistes Paket ist.

2. Verfahren nach Anspruch 1, wobei das Empfangen eines ersten Pakets durch die erste Ethernet-Schnittstelle der ersten Kommunikationsvorrichtung Folgendes umfasst:
Empfangen (S800c) des von der ersten Ethernet-Schnittstelle zurückgeschleiften ersten Pakets durch die erste Ethernet-Schnittstelle der ersten Kommunikationsvorrichtung.

3. Verfahren nach Anspruch 1, wobei das Empfangen eines ersten Pakets durch die erste Ethernet-Schnittstelle der ersten Kommunikationsvorrichtung Folgendes umfasst:
Empfangen des ersten Pakets von einer zweiten Ethernet-Schnittstelle der ersten Kommunikationsvorrichtung durch die erste Ethernet-Schnittstelle der ersten Kommunikationsvorrichtung.

4. Verfahren nach Anspruch 1, wobei das Empfangen eines ersten Pakets durch die erste Ethernet-Schnittstelle der ersten Kommunikationsvorrichtung Folgendes umfasst:
Empfangen des ersten Pakets von einer ersten Dienstschnittstelle der ersten Kommunikationsvorrichtung durch die erste Ethernet-Schnittstelle der ersten Kommunikationsvorrichtung, wobei die erste Dienstschnittstelle eine Schnittstelle ist, die von der ersten Kommunikationsvorrichtung zum Verbinden mit einer ersten Dienstvorrichtung verwendet wird.

5. Verfahren nach Anspruch 4, wobei das Verfahren ferner Folgendes umfasst:
Empfangen des ersten Pakets von der ersten Dienstvorrichtung durch die erste Serviceschnittstelle der ersten Kommunikationsvorrichtung, wobei die ersten Anzeigeinformationen im ersten Paket anzeigen, dass das erste Paket ein mehrfach gespeistes Paket ist; und
Weiterleiten des ersten Pakets durch die erste Dienstschnittstelle der ersten Kommunikationsvorrichtung an die erste Ethernet-Schnittstelle der ersten Kommunikationsvorrichtung.

6. Verfahren nach Anspruch 4, wobei das Verfahren ferner Folgendes umfasst:
Empfangen eines zweiten Pakets von der ersten Dienstvorrichtung durch die erste Serviceschnittstelle der ersten Kommunikationsvorrichtung;
erneutes Einkapseln des zweiten Pakets in das erste Paket durch die erste Kommunikationsvorrichtung, wobei, wenn ein dem zweiten Paket entsprechender Zuverlässigkeitsmechanismus ein mehrfach gespeister und selektiver Empfangsmechanismus ist, die ersten Angabeinformationen angeben, dass das erste Paket ein mehrfach gespeistes Paket ist, und wenn der dem zweiten Paket entsprechende Zuverlässigkeitsmechanismus ein Verpackungsmechanismus ist, die ersten Angabeinformationen angeben, dass das erste Paket kein mehrfach gespeistes Paket ist; und
Weiterleiten des ersten Pakets durch die erste Dienstschnittstelle der ersten Kommunikationsvorrichtung an die erste Ethernet-Schnittstelle der ersten Kommunikationsvorrichtung.

7. Verfahren nach Anspruch 6, wobei das Verfahren ferner Folgendes umfasst:
Weiterleiten des ersten Pakets durch die erste Dienstschnittstelle der ersten Kommunikationsvorrichtung an die erste Ethernet-Schnittstelle der ersten Kommunikationsvorrichtung.

8. Verfahren nach einem der Ansprüche 1 bis 7, wobei das Verfahren ferner Folgendes umfasst:
wenn die ersten Anzeigeinformationen angeben, dass das erste Paket kein mehrfach gespeistes Paket ist, und ein Wert eines ersten Felds im ersten Paket ein erster numerischer Wert ist (S804), Setzen (S805) des Werts des ersten Felds auf einen zweiten numerischen Wert durch die erste Kommunikationsvorrichtung, wobei der erste numerische Wert verwendet wird, um anzugeben, dass sich eine Übertragungsrichtung des ersten Pakets im Ethernetring-Netzwerk nicht geändert hat, und der zweite numerische Wert verwendet wird, um anzugeben, dass sich die Übertragungsrichtung des ersten Pakets im Ethernet-Ringnetzwerk geändert hat; und
Weiterleiten des ersten Pakets durch die erste Ethertet-Schnittstelle der ersten Kommunikationsvorrichtung an die erste Ethernet-Schnittstelle der ersten Kommunikationsvorrichtung.

9. Kommunikationsvorrichtung (130), wobei die Kommunikationsvorrichtung (130) eine erste Kommunikationsvorrichtung in einem Ethernetring-Netzwerk ist, die Kommunikationsvorrichtung (130) einen Fehler an einer ersten Ethernet-Schnittstelle erkennt, die Kommunikationsvorrichtung (130) ein Transceivermodul (1302) und ein Verarbeitungsmodul (1301) umfasst und das Transceivermodul (1302) die erste Ethernet-Schnittstelle umfasst, wobei
das Transceivermodul (1302) dazu konfiguriert ist, ein erstes Paket über die erste Ethernet-Schnittstelle zu empfangen;
das Verarbeitungsmodul (1301) dazu konfiguriert ist, zu bestimmen, ob erste Angabeinformationen im ersten Paket angeben, dass das erste Paket ein mehrfach gespeistes Paket in einem mehrfach gespeisten und selektiven Empfangsmechanismus ist, was bedeutet, dass eine Quellvorrichtung mindestens M identische Pakete über M verschiedene Übertragungspfade an eine Zielvorrichtung sendet und die Zielvorrichtung eines der mindestens M identischen Pakete empfängt und die anderen redundanten Pakete in den mindestens M Paketen verwirft, wobei M eine positive Ganzzahl größer oder gleich 2 ist, wobei das mehrfach gespeiste Paket eines der mindestens M identischen Pakete ist, die auf den M verschiedenen Übertragungspfaden zwischen der Quellvorrichtung und der Zielvorrichtung übertragen werden; und
wenn die ersten Angabeinformationen angeben, dass das erste Paket ein mehrfach gespeistes Paket ist, das Verarbeitungsmodul (1301) ferner dazu konfiguriert ist, das erste Paket zu verwerfen.

10. Kommunikationsvorrichtung nach Anspruch 9, wobei das Transceivermodul zum Empfangen eines ersten Pakets über die erste Ethernet-Schnittstelle konfiguriert ist, Folgendes umfasst:
das Transceivermodul dazu konfiguriert ist, das von der ersten Ethernet-Schnittstelle zurückgeschleifte erste Paket über die erste Ethernet-Schnittstelle zu empfangen.

11. Kommunikationsvorrichtung nach Anspruch 9, wobei das Transceivermodul ferner eine zweite Ethernet-Schnittstelle umfasst und das Transceivermodul so konfiguriert ist, dass es ein erstes Paket über die erste Ethernet-Schnittstelle empfängt, Folgendes umfasst:
das Transceivermodul dazu konfiguriert ist, das erste Paket von der zweiten Ethernet-Schnittstelle über die erste Ethernet-Schnittstelle zu empfangen.

12. Kommunikationsvorrichtung nach Anspruch 9, wobei das Transceivermodul ferner eine erste Dienstschnittstelle umfasst und das Transceivermodul so konfiguriert ist, dass es ein erstes Paket über die erste Ethernet-Schnittstelle empfängt, Folgendes umfasst:
das Transceivermodul dazu konfiguriert ist, das erste Paket von der ersten Dienstschnittstelle über die erste Ethernet-Schnittstelle zu empfangen.

## Revendications

1. Procédé de transmission de données, dans lequel le procédé de transmission de données est appliqué à un premier dispositif de communication dans un réseau Ethernet en anneau, le premier dispositif de communication détecte (S800a) une panne sur une première interface Ethernet, et le procédé comprend :
la réception (S801), par la première interface Ethernet du premier dispositif de communication, d'un premier paquet, dans lequel la première interface Ethernet est une interface Ethernet utilisée par le premier dispositif de communication pour se connecter à un second dispositif de communication ;
la détermination (S802), par le premier dispositif de communication, du fait de savoir si les premières informations d'indication dans le premier paquet indiquent que le premier paquet est un paquet à alimentations multiples dans un mécanisme de réception sélective et à alimentations multiples, ce qui signifie qu'un dispositif source envoie au moins M paquets identiques à un dispositif de destination via M chemins de transmission différents, et le dispositif de destination reçoit l'un des au moins M paquets identiques et abandonne les autres paquets redondants dans les au moins M paquets, où M est un nombre entier positif supérieur ou égal à 2, dans lequel le paquet à alimentations multiples est l'un quelconque des au moins M paquets identiques transmis sur les M chemins de transmission différents entre le dispositif source et le dispositif de destination ; et
l'abandon (S803), par le premier dispositif de communication, du premier paquet lorsque les premières informations d'indication indiquent que le premier paquet est un paquet à alimentations multiples.

2. Procédé selon la revendication 1, dans lequel la réception, par la première interface Ethernet du premier dispositif de communication, d'un premier paquet comprend :
la réception (S800c), par la première interface Ethernet du premier dispositif de communication, du premier paquet bouclé par la première interface Ethernet.

3. Procédé selon la revendication 1, dans lequel la réception, par la première interface Ethernet du premier dispositif de communication, d'un premier paquet comprend :
la réception, par la première interface Ethernet du premier dispositif de communication, du premier paquet en provenance d'une seconde interface Ethernet du premier dispositif de communication.

4. Procédé selon la revendication 1, dans lequel la réception, par la première interface Ethernet du premier dispositif de communication, d'un premier paquet comprend :
la réception, par la première interface Ethernet du premier dispositif de communication, du premier paquet en provenance d'une première interface de service du premier dispositif de communication, dans lequel la première interface de service est une interface utilisée par le premier dispositif de communication pour se connecter à un premier dispositif de service.

5. Procédé selon la revendication 4, dans lequel le procédé comprend également :
la réception, par la première interface de service du premier dispositif de communication, du premier paquet en provenance du premier dispositif de service, dans lequel les premières informations d'indication dans le premier paquet indiquent que le premier paquet est un paquet à alimentations multiples ; et la transmission, par la première interface de service du premier dispositif de communication, du premier paquet à la première interface Ethernet du premier dispositif de communication.

6. Procédé selon la revendication 4, dans lequel le procédé comprend également :
la réception, par la première interface de service du premier dispositif de communication, d'un second paquet en provenance du premier dispositif de service ;
la ré-encapsulation, par le premier dispositif de communication, du second paquet dans le premier paquet, dans lequel lorsqu'un mécanisme de fiabilité correspondant au second paquet est un mécanisme de réception sélective et à alimentations multiples, les premières informations d'indication indiquent que le premier paquet est un paquet à alimentations multiples, et lorsque le mécanisme de fiabilité correspondant au second paquet est un mécanisme d'enveloppement, les premières informations d'indication indiquent que le premier paquet n'est pas un paquet à alimentations multiples ; et
la transmission, par la première interface de service du premier dispositif de communication, du premier paquet à la première interface Ethernet du premier dispositif de communication.

7. Procédé selon la revendication 6, dans lequel le procédé comprend également :
la transmission, par la première interface de service du premier dispositif de communication, du premier paquet à une seconde interface Ethernet du premier dispositif de communication.

8. Procédé selon l'une quelconque des revendications 1 à 7, dans lequel le procédé comprend également :
lorsque les premières informations d'indication indiquent que le premier paquet n'est pas un paquet à alimentations multiples, et qu'une valeur d'un premier champ dans le premier paquet est une première valeur numérique (S804), le réglage (S805), par le premier dispositif de communication, de la valeur du premier champ sur une seconde valeur numérique, dans lequel la première valeur numérique est utilisée pour indiquer qu'une direction de transmission du premier paquet dans le réseau Ethernet en anneau n'a pas changé, et la seconde valeur numérique est utilisée pour indiquer que la direction de transmission du premier paquet du réseau Ethernet en anneau a changé ; et
la transmission, par la première interface Ethernet du premier dispositif de communication, du premier paquet à la seconde interface Ethernet du premier dispositif de communication.

9. Appareil de communication (130), dans lequel l'appareil de communication (130) est un premier dispositif de communication dans un réseau Ethernet en anneau, l'appareil de communication (130) détecte une panne sur une première interface Ethernet, l'appareil de communication (130) comprend un module émetteur-récepteur (1302) et un module de traitement (1301), et le module émetteur-récepteur (1302) comprend la première interface Ethernet, dans lequel
le module émetteur-récepteur (1302) est configuré pour recevoir un premier paquet via la première interface Ethernet ;
le module de traitement (1301) est configuré pour déterminer si les premières informations d'indication dans le premier paquet indiquent que le premier paquet est un paquet à alimentations multiples dans un mécanisme de réception sélective et à alimentations multiples, ce qui signifie qu'un dispositif source envoie au moins M paquets identiques à un dispositif de destination via M chemins de transmission différents, et le dispositif de destination reçoit l'un des au moins M paquets identiques et abandonne les autres paquets redondants dans les au moins M paquets, où M est un nombre entier positif supérieur ou égal à 2, dans lequel le paquet à alimentations multiples est l'un quelconque des au moins M paquets identiques transmis sur les M chemins de transmission différents entre le dispositif source et le dispositif de destination ; et
lorsque les premières informations d'indication indiquent que le premier paquet est un paquet à alimentations multiples, le module de traitement (1301) est également configuré pour abandonner le premier paquet.

10. Appareil de communication selon la revendication 9, dans lequel le fait que le module émetteur-récepteur est configuré pour recevoir un premier paquet via la première interface Ethernet comprend ce qui suit :
le module émetteur-récepteur est configuré pour recevoir le premier paquet bouclé par la première interface Ethernet via la première interface Ethernet.

11. Appareil de communication selon la revendication 9, dans lequel le module émetteur-récepteur comprend également une seconde interface Ethernet, et le fait que le module émetteur-récepteur est configuré pour recevoir un premier paquet via la première interface Ethernet comprend ce qui suit :
le module émetteur-récepteur est configuré pour recevoir le premier paquet en provenance de la seconde interface Ethernet via la première interface Ethernet.

12. Appareil de communication selon la revendication 9, dans lequel le module émetteur-récepteur comprend également une première interface de service, et le fait que le module émetteur-récepteur est configuré pour recevoir un premier paquet via la première interface Ethernet comprend ce qui suit :
le module émetteur-récepteur est configuré pour recevoir le premier paquet en provenance de la première interface de service via la première interface Ethernet.
